# EUROPEAN PATENT APPLICATION

(11) **EP 4 823 024 A1**
(43) Date of publication of application: **14.10.2026**
(21) Application number: 24899540.9
(22) Date of filing: 04.11.2024
(51) Int. Cl.: H04L 5/00

(54) **DETERMINATION METHOD AND RELATED APPARATUS**

(30) Priority: 05.12.2023 CN 202311658019
(71) Applicant: Huawei Technologies Co., Ltd., Shenzhen, Guangdong 518129 (CN)
(72) Inventor: ZHANG, Zhang, Shenzhen, Guangdong 518129 (CN); WANG, Fan, Shenzhen, Guangdong 518129 (CN)
(74) Representative: Huawei European IPR
(86) International application number: PCT/CN2024/129635
(87) International publication number: WO 2025/118897

(57) **Abstract**

A determining method and a related apparatus are provided. The method includes: determining a first candidate set and a second candidate set, where the first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3; and determining one or more parameter value combinations based on the first candidate set and the second candidate set, where each parameter value combination includes one value of the first parameter and one value of the second parameter. In this way, a first communication apparatus can generate a pilot sequence based on the first sequence, thereby increasing a capacity of the pilot sequence, and meeting a capacity requirement of a communication system. Further, this helps ensure peak-to-average power ratio PAPR performance or cubic metric CM performance of the pilot sequence.

## Description

This application claims priority to Chinese Patent Application No. 202311658019.0, filed with the China National Intellectual Property Administration on December 5, 2023 and entitled "DETERMINING METHOD AND RELATED APPARATUS", which is incorporated herein by reference in its entirety.

### TECHNICAL FIELD

This application relates to the field of communication technologies, and in particular, to a determining method and related apparatus.

### BACKGROUND

With the development of multi-antenna technologies and increase of multi-user requirements, a quantity of pilots that need to be used simultaneously is growing. Therefore, there is an increasingly strong demand for large-capacity pilot sequences. In the initial release (release 15, R15) of new radio (new radio, NR), methods for generating sounding reference signal (sounding reference signal, SRS) sequences and demodulation reference signal (demodulation reference signal, DMRS) sequences (both the SRS sequences and the DMRS sequences may be referred to as pilot sequences) are specified. During the research and standardization processes of R16 to R19, there are almost always corresponding research topics or standard topics aimed at enhancing capacities of SRSs and DMRSs, and peak-to-average power ratio (peak-to-average power ratio, PAPR) performance and/or cubic metric (cubic metric, CM) performance of the SRSs and DMRSs are also concerned.

Currently, a terminal device may generate pilot sequences by using Zadoff-Chu (Zadeoff-Chu, ZC) sequences. Specifically, the terminal device performs truncation or cyclic shift extension on the ZC sequences to obtain the pilot sequences. Although the ZC sequences have advantages in terms of PAPR performance or CM performance, the ZC sequences have a small capacity, and it is difficult to meet capacity requirements of communication systems.

### SUMMARY

This application provides a determining method and a related apparatus, so that a first communication apparatus determines a first candidate set and a second candidate set. The first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3. The first communication apparatus determines one or more parameter value combinations based on the first candidate set and the second candidate set, where each parameter value combination includes one value of the first parameter and one value of the second parameter.

A first aspect of this application provides a determining method. The method is performed by the first communication apparatus. The first communication apparatus may be a device or an apparatus with a chip, a device or an apparatus integrated with a circuit, or a chip, a chip system, a module, or a control unit in the device or apparatus shown above. This is not specifically limited in this application. The method provided in this application includes: The first communication apparatus determines the first candidate set and the second candidate set, where the first candidate set includes one or more values of the first parameter, the second candidate set includes one or more values of the second parameter, the first parameter and the second parameter are jointly used to determine the element in the first sequence, the first sequence is the z-th order exponential sequence, and z is an integer greater than or equal to 3; and the first communication apparatus determines the one or more parameter value combinations based on the first candidate set and the second candidate set, where each parameter value combination includes one value of the first parameter and one value of the second parameter. It can be learned that the first sequence is a z-th order exponential sequence, and z is an integer greater than or equal to 3. The first sequence may be used to generate a pilot sequence, thereby increasing a capacity of a pilot sequence, and meeting a capacity requirement of a communication system. Further, the first communication apparatus determines the one or more parameter value combinations based on the first candidate set and the second candidate set, so that the first communication apparatus generates the first sequence by using an appropriate parameter value combination, and generates the pilot sequence based on the first sequence. This helps ensure PAPR performance or CM performance of the pilot sequence. Certainly, the first sequence may also be used to generate a synchronization sequence or a scrambling sequence, which helps improve related performance of the synchronization sequence and increase a capacity of the scrambling sequence. Further, related performance of the synchronization sequence or the scrambling sequence can be further improved by using the foregoing technical solution. An application scenario of this application is not specifically limited.

A second aspect of this application provides a pilot sequence sending method. The method is performed by a first communication apparatus. The first communication apparatus may be a device or an apparatus with a chip, a device or an apparatus integrated with a circuit, or a chip, a chip system, a module, or a control unit in the device or apparatus shown above. This is not specifically limited in this application. The method provided in this application includes: The first communication apparatus determines a value of a first parameter and a value of a second parameter, where the value of the first parameter is a value of the first parameter in a target parameter value combination, the value of the second parameter is a value of the second parameter in the target parameter value combination, the target parameter value is one of one or more parameter value combinations, the one or more parameter value combinations are determined based on a first candidate set and a second candidate set, the first candidate set includes one or more values of the first parameter, the second candidate set includes one or more values of the second parameter, the first parameter and the second parameter are jointly used to determine an element in a first sequence, the first sequence is a z-th order exponential sequence, and z is an integer greater than or equal to 3; the first communication apparatus generates the first sequence based on the value of the first parameter and the value of the second parameter; and the first communication apparatus generates a target pilot sequence based on the first sequence and sends the target pilot sequence.

It can be learned that the first sequence is a z-th order exponential sequence, and z is an integer greater than or equal to 3. The first communication apparatus generates the target pilot sequence based on the first sequence, thereby increasing a capacity of the target pilot sequence, and meeting a capacity requirement of a communication system. Further, the one or more parameter value combinations are determined based on the first candidate set and the second candidate set, and a target parameter value is one of the one or more parameter value combinations. This helps ensure PAPR performance or CM performance of the target pilot sequence. Certainly, the first sequence may also be used to generate a synchronization sequence or a scrambling sequence, which helps improve related performance of the synchronization sequence and increase a capacity of the scrambling sequence. Further, related performance of the synchronization sequence or the scrambling sequence can be further improved by using the foregoing technical solution. An application scenario of this application is specifically not limited.

According to the first aspect or the second aspect, in a possible implementation, the first parameter and the second parameter are jointly used to determine a phase of the element in the first sequence. In this implementation, the first sequence may be a constant modulus sequence. Therefore, one or more parameter value combinations are selected by using the technical solution of this application. However, the one or more parameter value combinations may be used for one or more different first sequences, and the different first sequences are mainly different in phases of elements in the first sequences. This helps ensure PAPR performance or CM performance of the pilot sequence generated based on the first sequence.

According to the first aspect or the second aspect, in a possible implementation, the first parameter is a coefficient of an x-th order term, with respect to a position index variable n, used for generating a phase in the first sequence; the second parameter is a coefficient of a y-th order term, with respect to the position index variable n, used for generating the phase in the first sequence; x is an integer greater than or equal to 2; y is an integer greater than or equal to 2; and x is greater than y. In this implementation, the first sequence is a z-th order exponential sequence, and z is an integer greater than or equal to 3. The first parameter and the second parameter each may be a coefficient of a higher-order term in the first sequence, so that the first communication apparatus selects one or more parameter value combinations by using the solution shown in the first aspect. However, the one or more parameter value combinations may be used for one or more different first sequences, and different first sequences are mainly different in phases of elements in the first sequences. The first communication apparatus generates a corresponding first sequence by using an appropriate parameter value combination, and generates a pilot sequence based on the first sequence. This helps ensure PAPR performance or CM performance of the pilot sequence.

According to the first aspect or the second aspect, in a possible implementation, each of the one or more parameter value combinations meets a first target condition. In this implementation, the parameter value combination may be used to determine the first sequence, so that PAPR performance or CM performance of the pilot sequence generated by the first communication apparatus based on the first sequence can be ensured.

According to the first aspect or the second aspect, in a possible implementation, that each parameter value combination meets the first target condition includes: among all values of the first parameter in the first candidate set and all values of the second parameter in the second candidate set, Q parameter value combinations corresponding to Q values that minimize a value of a target function, where Q is an integer greater than or equal to 1. In this implementation, an implementation of selecting the Q parameter value combinations is shown. The parameter value combinations may be used to determine the first sequence, so that PAPR performance or CM performance of the pilot sequence generated by the first communication apparatus based on the first sequence can be ensured.

According to the first aspect or the second aspect, in a possible implementation, the target function is a function related to a PAPR or a function related to a CM. In this way, one or more parameter value combinations are selected by using PAPR performance or CM performance minimization as an objective. The parameter value combination may be used to determine the first sequence, thereby helping ensure PAPR performance or CM performance of the pilot sequence generated by the first communication apparatus based on the first sequence.

According to the first aspect or the second aspect, in a possible implementation, the target function is a function representing the PAPR or the CM.

According to the first aspect or the second aspect, in a possible implementation, the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 πnk}{R}}\right)}^{D}$
where *s*ₒ(*n*) = z(*n*), z(*n*) is the first sequence, the position index variable n in the first sequence belongs to an interval [0, P-1], P = L, and L is a length of a pilot sequence; and C is a positive number, D is a positive number, N is a largest prime number not greater than L or a smallest prime number not less than L, and R represents a quantity of sampling points for sampling a time domain signal generated by using *sₒ*(*n*); or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, and L is a length of the pilot sequence; and C is a positive number, D is a positive number, N is a largest prime number not greater than L or a smallest prime number not less than L, and R represents a quantity of sampling points for sampling a time domain signal generated by using *sₒ*(*n*).

In this implementation, a specific form of the target function is shown based on a definition of the PAPR, thereby facilitating implementation of the solution, and selecting one or more parameter value combinations with an objective of minimizing the PAPR performance. The parameter value combination may be used to determine the first sequence, thereby helping ensure PAPR performance of the pilot sequence generated by the first communication apparatus based on the first sequence.

According to the first aspect or the second aspect, in a possible implementation, the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 πnθ}\right)}^{D}$
where *sₒ*(*n*) = z(*n*)*,* z(*n*) is the first sequence, the position index variable n in the first sequence belongs to an interval [0, P-1], P = L, L is a length of a pilot sequence, C is a positive number, D is a positive number, and N is a largest prime number not greater than L or a smallest prime number not less than L; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, and N is a largest prime number not greater than L or a smallest prime number not less than L. In this implementation, a specific form of the target function is shown based on a definition of the PAPR, thereby facilitating implementation of the solution, and selecting one or more parameter value combinations with an objective of minimizing the PAPR performance. The parameter value combination may be used to determine the first sequence, thereby helping ensure PAPR performance of the pilot sequence generated by the first communication apparatus based on the first sequence.

According to the first aspect or the second aspect, in a possible implementation, the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 π \left(n+\frac{{f}_{c}}{{f}_{o}}\right) k}{R}}\right)}^{D}$
where *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*), f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*), f_{c} is a frequency of a carrier to which the pilot sequence is mapped, and fₒ is a center frequency of the carrier. In this implementation, a specific form of the target function is shown based on a definition of the PAPR, thereby facilitating implementation of the solution, and selecting one or more parameter value combinations with an objective of minimizing the PAPR performance. The parameter value combination may be used to determine the first sequence, thereby helping ensure PAPR performance of the pilot sequence generated by the first communication apparatus based on the first sequence.

According to the first aspect or the second aspect, in a possible implementation, the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 π \left(n+\frac{{f}_{c}}{{f}_{o}}\right) θ}\right)}^{D}$
where *sₒ*(*n*) = *z*(*n*), *z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier. In this implementation, a specific form of the target function is shown based on a definition of the PAPR, thereby facilitating implementation of the solution, and selecting one or more parameter value combinations with an objective of minimizing the PAPR performance. The parameter value combination may be used to determine the first sequence, thereby helping ensure PAPR performance of the pilot sequence generated by the first communication apparatus based on the first sequence.

According to the first aspect or the second aspect, in a possible implementation, the target function is expressed as: $f \left({s}_{o}\left(n\right)\right) = \frac{RCM \left[s\left(t\right)\right] {\left|- dB{RCM}_{ref}\right|}_{dB}}{C}$
where *sₒ*(*n*) = *z*(*n*)*, z*(*n*) is the first sequence, the position index variable n in the first sequence belongs to an interval [0, P-1], P = L, and L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ , and *s(t)* is a time-domain signal generated by using *sₒ*(*n*); and both *RCM*_{*ref*|*dB*} and *C* are constants, and *rms*(u) represents taking a root mean square of u; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, and L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$, and *s*(*t*) is a time-domain signal generated by using *sₒ*(*n*); and both *RCM*_{*ref*|*dB*} and C are constants, and *rms(u)* represents taking a root mean square of u. In this implementation, a specific form of the target function is shown based on a definition of the CM, thereby facilitating implementation of the solution, and selecting one or more parameter value combinations with an objective of minimizing CM performance. The parameter value combination may be used to determine the first sequence, thereby helping ensure CM performance of the pilot sequence generated by the first communication apparatus based on the first sequence.

According to the first aspect or the second aspect, in a possible implementation, *t*(*n* - *P*) represents (*t*(*0*), *t*(1), ... , *t*(*L - P -* 1)), and (*t*(0), *t*(1)*,* ... , *t*(*L - P* - 1)) is a combination (*t*(0), *t*(1), ... , *t*(*L - P -* 1)), minimizing a value of the target function, among all values of (*t*(0), *t*(1), ... , *t*(*L - P -* 1)). In this implementation, when P < L, *sₒ*(*n*) is obtained by performing length changing based on *z*(*n*). The first communication apparatus may determine a redundancy extension part in *sₒ*(*n*) based on this implementation, to further ensure PAPR performance or CM performance of the pilot sequence generated based on the first sequence.

According to the first aspect or the second aspect, in a possible implementation, $z \left(n\right) = {e}^{- j 2 π \left(\frac{{an}^{3}}{N}+\frac{{bn}^{2}}{M}+\frac{cn}{K}+d\right)}$ or $z \left(n\right) = {e}^{- j 2 π \left(\frac{{an}^{3}}{N}+\frac{b \left({n}^{2}+{c}_{0}n\right)}{M}+\frac{c ′ n}{K ′}+d\right)}$, 0 ≤ *n* ≤ *P* - 1; the first parameter is a in *z*(*n*), and the second parameter is b in *z*(*n*); N is a period of a cubic term, with respect to a position index variable n in *z*(*n*), used for generating a phase; M is a period of a quadratic term, with respect to the position index variable n in *z*(*n*), used for generating the phase; and K or *K'* is determined based on a quantity of cyclic shifts corresponding to the pilot sequence. Optionally, K or *K'* is further determined based on N and M.

According to the first aspect or the second aspect, in a possible implementation, the method further includes: The first communication apparatus receives first indication information, where the first indication information indicates the target function. In this way, the first communication apparatus selects one or more parameter value combinations based on the target function.

According to the first aspect or the second aspect, in a possible implementation, the first indication information is carried in downlink control information (downlink control information, DCI), a media access control element (media access control element, MAC CE), or a radio resource control (radio resource control, RRC) message.

According to the first aspect or the second aspect, in a possible implementation, the one or more parameter value combinations are used to generate a pilot sequence set, the pilot sequence set includes one or more pilot sequences, and one pilot sequence corresponds to one parameter value combination. In this way, the first communication apparatus obtains one or more pilot sequences, thereby ensuring PAPR performance or CM performance of the pilot sequences, and ensuring correlation performance between the pilot sequences, and avoiding pilot interference between a plurality of users.

According to the first aspect, in a possible implementation, the method further includes: The first communication apparatus receives second indication information, where the second indication information indicates one of the one or more parameter value combinations, so that the first communication apparatus generates the first sequence based on the parameter value combination, and then generates the pilot sequence based on the first sequence. In this way, a capacity of the pilot sequence is ensured, and PAPR performance or CM performance of the pilot sequence is further ensured.

According to the first aspect, in a possible implementation, the method further includes: The first communication apparatus generates the first sequence based on the parameter value combination indicated by the second indication information; the first communication apparatus generates a target pilot sequence based on the first sequence; and the first communication apparatus sends the target pilot sequence. In this way, a capacity of the pilot sequence is ensured. Further, PAPR performance or CM performance of the pilot sequence is further ensured.

According to the first aspect, in a possible implementation, the second indication information indicates an index of the parameter value combination; or the second indication information indicates a value of the first parameter and a value of the second parameter in the parameter value combination. The implementation in which the second indication information indicates the index of the parameter value combination helps reduce indication overheads.

According to the first aspect or the second aspect, in a possible implementation, the method further includes: The first communication apparatus generates a pilot sequence set based on the one or more parameter value combinations and the first sequence, where the pilot sequence set includes one or more pilot sequences, and one pilot sequence corresponds to one parameter value combination. In this way, the first communication apparatus obtains one or more pilot sequences, thereby ensuring PAPR performance or CM performance of the pilot sequences, and ensuring correlation performance between the pilot sequences, and avoiding pilot interference between a plurality of users.

According to the first aspect or the second aspect, in a possible implementation, the pilot sequences in the pilot sequence set are sorted in ascending order or descending order of corresponding values of the target function for the parameter value combinations corresponding to the pilot sequences; or the pilot sequences in the pilot sequence set are sorted in ascending order or descending order of values of the first parameter in the parameter value combinations corresponding to the pilot sequences, and pilot sequences corresponding to parameter value combinations with a same value of the first parameter are sorted in ascending order or descending order of values of the second parameter in the parameter value combinations with the same value of the first parameter; or the pilot sequences in the pilot sequence set are sorted in ascending order or descending order of values of the second parameter in the parameter value combinations corresponding to the pilot sequences, and pilot sequences corresponding to parameter value combinations with a same value of the second parameter are sorted in ascending order or descending order of values of the first parameter in the parameter value combinations with the same value of the second parameter. A plurality of possible sorting manners of the pilot sequences in the pilot sequence set are shown, so that the pilot sequences can be indicated between communication apparatuses, and the pilot sequences can be transmitted between the communication apparatuses.

According to the first aspect, in a possible implementation, the method further includes: The first communication apparatus receives third indication information, where the third indication information indicates a target pilot sequence, and the target pilot sequence is a pilot sequence in the pilot sequence set. Therefore, the first communication apparatus sends the target pilot sequence. In this way, a capacity of the target pilot sequence is ensured, and PAPR performance or CM performance of the target pilot sequence is further ensured.

According to the first aspect, in a possible implementation, the method further includes: The first communication apparatus sends the target pilot sequence. In this way, a capacity of the target pilot sequence sent by the first communication apparatus is ensured, and PAPR performance or CM performance of the target pilot sequence is further ensured.

According to the first aspect, in a possible implementation, the third indication information indicates an index of the target pilot sequence. This helps reduce indication overheads.

According to the first aspect, in a possible implementation, the third indication information is carried in DCI, a MAC CE, or an RRC message.

According to the first aspect or the second aspect, in a possible implementation, a value of the first parameter in the first candidate set belongs to an interval (0, N-1], where N is a largest prime number not greater than L or a smallest prime number not less than L, and x is an integer greater than or equal to 2. Optionally, N is a period of the x-th order term, with respect to the position index variable n, used for generating the phase in the first sequence. N is a prime number, and cross-correlation performance or cross-ambiguity performance between any two first sequences that include different x-th order terms is good.

According to the first aspect or the second aspect, in a possible implementation, a value of the second parameter in the second candidate set belongs to an interval (0, M-1], or an interval (0, N-1], or an interval (0, m-1], where m is a prime number; M is a period of the y-th order term, with respect to the position index variable n, used for generating the phase in the first sequence; N is a period of the x-th order term, with respect to the position index variable n, used for generating the phase in the first sequence; x is an integer greater than or equal to 2; y is an integer greater than or equal to 2; x is greater than y; and N is a largest prime number not greater than L or a smallest prime number not less than L.

According to the first aspect or the second aspect, in a possible implementation, M = N; or M = 2N; or M =*sm*², where both s and m are prime numbers. In this implementation, when M is a prime number or M = 2N, cross-correlation performance or cross-ambiguity performance between any two first sequences that include different y-th order terms is good.

According to the first aspect or the second aspect, in a possible implementation, the first sequence ${s}_{o} \left(n\right) = \left\{\begin{matrix}z \left(n\right) , 0 \leq n \leq P - 1 \\ t \left(n-P\right) , P \leq n \leq L - 1\end{matrix}\right.$ , and 0 ≤ *n* ≤ *P* - 1, where P < L; L is a length of a pilot sequence; *z*(*n*) is a base sequence; a position index variable n in the base sequence belongs to an interval [0, P-1]; P = *min*(*N*,*M*) or *P* = *max*(*N,M*); M is a period of a y-th order term, with respect to the position index variable n, used for generating a phase in the base sequence; and N is a period of an x-th order term, with respect to the position index variable n, used for generating the phase in the base sequence. Therefore, it is ensured that the sequence including the cubic term in the first sequence and/or the sequence including the quadratic term in the first sequence include/includes a sequence of a complete period.

According to the second aspect, in a possible implementation, that the first communication apparatus determines the value of the first parameter and the value of the second parameter includes: The first communication apparatus receives fourth indication information from the second communication apparatus, where the fourth indication information indicates the target parameter value combination. Therefore, the first communication apparatus generates the first sequence based on the target parameter value combination, and generates a target pilot sequence based on the first sequence. Therefore, a capacity of the target pilot sequence is increased, and PAPR performance or CM performance of the target pilot sequence is ensured.

A third aspect of this application provides a first communication apparatus, including:
a processing module, configured to: determine a first candidate set and a second candidate set, where the first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3; and determine one or more parameter value combinations based on the first candidate set and the second candidate set, where each parameter value combination includes one value of the first parameter and one value of the second parameter.

A fourth aspect of this application provides a first communication apparatus, including:
a processing module, configured to: determine a value of a first parameter and a value of a second parameter, where the value of the first parameter is a value of the first parameter in a target parameter value combination, the value of the second parameter is a value of the second parameter in the target parameter value combination, the target parameter value is one of one or more parameter value combinations, the one or more parameter value combinations are determined based on a first candidate set and a second candidate set, the first candidate set includes one or more values of the first parameter, the second candidate set includes one or more values of the second parameter, the first parameter and the second parameter are jointly used to determine an element in a first sequence, the first sequence is a z-th order exponential sequence, and z is an integer greater than or equal to 3; generate the first sequence based on the value of the first parameter and the value of the second parameter; and generate a target pilot sequence based on the first sequence; and
a transceiver module, configured to send the target pilot sequence.

According to the third aspect or the fourth aspect, in a possible implementation, the first parameter and the second parameter are jointly used to determine a phase of the element in the first sequence.

According to the third aspect or the fourth aspect, in a possible implementation, the first parameter is a coefficient of an x-th order term, with respect to a position index variable n, used for generating a phase in the first sequence; the second parameter is a coefficient of a y-th order term, with respect to the position index variable n, used for generating the phase in the first sequence; x is an integer greater than or equal to 2; y is an integer greater than or equal to 2; and x is greater than y.

According to the third aspect or the fourth aspect, in a possible implementation, each of the one or more parameter value combinations meets a first target condition.

According to the third aspect or the fourth aspect, in a possible implementation, that each parameter value combination meets the first target condition includes: among all values of the first parameter in the first candidate set and all values of the second parameter in the second candidate set, Q parameter value combinations corresponding to first Q values that minimize a value of a target function, where Q is an integer greater than or equal to 1.

According to the third aspect or the fourth aspect, in a possible implementation, the target function is a function related to a PAPR or a function related to a CM.

According to the third aspect or the fourth aspect, in a possible implementation, the target function is a function representing the PAPR or the CM.

According to the third aspect or the fourth aspect, in a possible implementation, the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 πnk}{R}}\right)}^{D}$
where *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, and R represents a quantity of sampling points for sampling a time domain signal generated by using *sₒ*(*n*); or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, and R represents a quantity of sampling points for sampling a time domain signal generated by using *sₒ*(*n*)*.*

According to the third aspect or the fourth aspect, in a possible implementation, the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 πnθ}\right)}^{D}$
where *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, and N is a largest prime number not greater than L or a smallest prime number not less than L; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, and N is a largest prime number not greater than L or a smallest prime number not less than L.

According to the third aspect or the fourth aspect, in a possible implementation, the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 π \left(n+\frac{{f}_{C}}{{f}_{O}}\right) k}{R}}\right)}^{D}$
where *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*), f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*)*,* f_{c} is a frequency of a carrier to which the pilot sequence is mapped, and fₒ is a center frequency of the carrier.

According to the third aspect or the fourth aspect, in a possible implementation, the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 π \left(n+\frac{{f}_{C}}{{f}_{O}}\right) θ}\right)}^{D}$
where *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier.

According to the third aspect or the fourth aspect, in a possible implementation, the target function is expressed as: $f \left({s}_{o}\left(n\right)\right) = \frac{RCM \left[s\left(t\right)\right] {\left|- dB{RCM}_{ref}\right|}_{dB}}{C}$
where *sₒ*(*n*) = *z*(*n*)*, z*(*n*) is the first sequence, the position index variable n in the first sequence belongs to an interval [0, P-1], P = L, and L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ , and s(t)is a time domain signal generated by using *sₒ*(*n*); and both *RCM*_{*ref*|*dB*} and C are constants, and *rms(u)* represents taking a root mean square of u; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, and L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{0}\left(n\right)\right]}\right)}^{3}\right]\right]$, and *s*(*t*) is a time-domain signal generated by using *sₒ*(*n*); and both *RCM*_{*ref*|*dB*} and *C* are constants, and *rms*(u) represents taking a root mean square of u.

According to the third aspect or the fourth aspect, in a possible implementation, *t*(*n* - *P*) represents (*t*(0)*, t*(1), ... , *t*(*L - P -* 1)), and (*t*(0), *t*(1), ..., *t*(*L - P* - 1)) is a combination (*t*(0), *t*(1), ... , *t*(*L - P -* 1)), minimizing a value of the target function, among all values of (*t*(0), *t*(1), ... , *t*(*L - P -* 1)).

According to the third aspect or the fourth aspect, in a possible implementation, $z \left(n\right) = {e}^{- j 2 π \left(\frac{{an}^{3}}{N}+\frac{{bn}^{2}}{M}+\frac{cn}{K}+d\right)}$ or $z \left(n\right) = {e}^{- j 2 π \left(\frac{{an}^{3}}{N}+\frac{b \left({n}^{2}+{c}_{0}n\right)}{M}+\frac{c ′ n}{K ′}+d\right)}$, 0 ≤ *n* ≤ *P* - 1, the first parameter is a in *z(n),* and the second parameter is b in *z*(*n*); N is a period of a cubic term that is about a position index variable n in *z*(*n*) and that is used to generate a phase, M is a period of a quadratic term that is about the position index variable n in *z*(*n*) and that is used to generate the phase, and K or *K'* is determined based on a quantity of cyclic shifts corresponding to the pilot sequence. Optionally, K or *K'* is further determined based on N and M.

According to the third aspect, in a possible implementation, the first communication apparatus further includes a transceiver module, and the transceiver module is configured to receive first indication information, where the first indication information indicates the target function.

According to the fourth aspect, in a possible implementation, the transceiver module is further configured to receive first indication information, where the first indication information indicates the target function.

According to the third aspect or the fourth aspect, in a possible implementation, the first indication information is carried in DCI, a MAC CE, or an RRC message.

According to the third aspect or the fourth aspect, in a possible implementation, the one or more parameter value combinations are used to generate a pilot sequence set, the pilot sequence set includes one or more pilot sequences, and one pilot sequence corresponds to one parameter value combination.

According to the third aspect, in a possible implementation, the first communication apparatus further includes a transceiver module, and the transceiver module is configured to receive second indication information, where the second indication information indicates one of the one or more parameter value combinations.

According to the third aspect, in a possible implementation, the processing module is further configured to: generate the first sequence based on the parameter value combination indicated by the second indication information; and generate a target pilot sequence based on the first sequence; and
the first communication apparatus further includes a transceiver module, and the transceiver module is configured to send the target pilot sequence.

According to the third aspect, in a possible implementation, the second indication information indicates an index of the parameter value combination; or the second indication information indicates a value of the first parameter and a value of the second parameter in the parameter value combination.

According to the third aspect or the fourth aspect, in a possible implementation, the processing module is further configured to generate a pilot sequence set based on the one or more parameter value combinations and the first sequence, where the pilot sequence set includes one or more pilot sequences, and one pilot sequence corresponds to one parameter value combination.

According to the third aspect or the fourth aspect, in a possible implementation, the pilot sequences in the pilot sequence set are sorted in ascending order or descending order of corresponding values of the target function for the parameter value combinations corresponding to the pilot sequences; or the pilot sequences in the pilot sequence set are sorted in ascending order or descending order of values of the first parameter in the parameter value combinations corresponding to the pilot sequences, and pilot sequences corresponding to parameter value combinations with a same value of the first parameter are sorted in ascending order or descending order of values of the second parameter in the parameter value combinations with the same value of the first parameter; or the pilot sequences in the pilot sequence set are sorted in ascending order or descending order of values of the second parameter in the parameter value combinations corresponding to the pilot sequences, and pilot sequences corresponding to parameter value combinations with a same value of the second parameter are sorted in ascending order or descending order of values of the first parameter in the parameter value combinations with the same value of the second parameter.

According to the third aspect, in a possible implementation, the first communication apparatus further includes a transceiver module, and the transceiver module is configured to receive third indication information, where the third indication information indicates a target pilot sequence, and the target pilot sequence is a pilot sequence in the pilot sequence set.

According to the third aspect, in a possible implementation, the first communication apparatus further includes a transceiver module, and the transceiver module is configured to send the target pilot sequence.

According to the third aspect, in a possible implementation, the third indication information indicates an index of the target pilot sequence.

According to the third aspect, in a possible implementation, the third indication information is carried in DCI, a MAC CE, or an RRC message.

According to the third aspect or the fourth aspect, in a possible implementation, a value of the first parameter in the first candidate set belongs to an interval (0, N-1], where N is a largest prime number not greater than L or a smallest prime number not less than L, and x is an integer greater than or equal to 2. Optionally, N is a period of the x-th order term, with respect to the position index variable n, used for generating the phase in the first sequence.

According to the third aspect or the fourth aspect, in a possible implementation, a value of the second parameter in the second candidate set belongs to an interval (0, M-1], or an interval (0, N-1], or an interval (0, m-1], where m is a prime number; M is a period of the y-th order term, with respect to the position index variable n, used for generating the phase in the first sequence; N is a period of the x-th order term, with respect to the position index variable n, used for generating the phase in the first sequence; x is an integer greater than or equal to 2; y is an integer greater than or equal to 2; x is greater than y; and N is a largest prime number not greater than L or a smallest prime number not less than L.

According to the third aspect or the fourth aspect, in a possible implementation, M = N; or M = 2N; or M =*sm*², where both s and m are prime numbers.

According to the third aspect or the fourth aspect, in a possible implementation, the first sequence ${s}_{0} \left(n\right) = \left\{\begin{matrix}z \left(n\right) , 0 \leq n \leq P - 1 \\ t \left(n-P\right) , P \leq n \leq L - 1\end{matrix}\right.$ , and 0 ≤ *n* ≤ *P* - 1, where P < L; L is a length of a pilot sequence; *z*(*n*) is a base sequence; a position index variable n in the base sequence belongs to an interval [0, P-1]; P = *min*(*N*,*M*) or *P* = *max*(*N, M*); M is a period of a y-th order term, with respect to the position index variable n, used for generating a phase in the base sequence; and N is a period of an x-th order term, with respect to the position index variable n, used for generating the phase in the base sequence.

According to the fourth aspect, in a possible implementation, the processing module is specifically configured to receive fourth indication information from the second communication apparatus, where the fourth indication information indicates the target parameter value combination.

A fifth aspect of this application provides a communication apparatus. The communication apparatus includes a processor and a memory. The memory stores a computer program or computer instructions, and the processor is configured to invoke and run the computer program or the computer instructions stored in the memory, so that the processor implements any one of the implementations of the first aspect or the second aspect.

Optionally, the communication apparatus further includes a transceiver, and the processor is configured to control the transceiver to receive and send signals.

A sixth aspect of this application provides a communication apparatus, including a processor and an interface circuit. The processor is configured to: communicate with another apparatus through the interface circuit, and perform the method according to the first aspect or the second aspect. There are one or more processors.

A seventh aspect of this application provides a communication apparatus, including a processor, configured to: connect to a memory, and invoke a program stored in the memory, to perform the method according to the first aspect or the second aspect. The memory may be located inside or outside the communication apparatus. In addition, there are one or more processors.

In an implementation, the communication apparatuses in the third aspect and the fourth aspect may be chips or chip systems.

An eighth aspect of this application provides a computer program product including computer instructions. When the computer program product runs on a computer, the computer is caused to perform any one of the implementations of the first aspect or the second aspect.

A ninth aspect of this application provides a computer-readable storage medium, including computer instructions. When the instructions are run on a computer, the computer is caused to perform any one of the implementations of the first aspect or the second aspect.

A tenth aspect of this application provides a chip apparatus, including a processor, configured to invoke a computer program or computer instructions in a memory, to cause the processor to perform any one of the implementations of the first aspect or the second aspect.

Optionally, the processor is coupled to the memory through an interface.

An eleventh aspect of this application provides a chip system. The chip system includes a processor, and the processor is configured to invoke a computer program or computer instructions, so that a communication device on which the chip system is installed performs any implementation of the first aspect or the second aspect, or a communication device is enabled to perform any implementation of the first aspect or the second aspect.

Optionally, the chip system further includes a communication interface, configured to communicate with another apparatus.

A twelfth aspect of this application provides a chip system. The chip system is applied to an electronic device, the chip system includes one or more processors, and the one or more processors are configured to invoke computer instructions and enable the electronic device to perform any implementation of the first aspect or the second aspect.

It can be learned from the foregoing technical solution that, the first communication apparatus determines the first candidate set and the second candidate set, where the first candidate set includes one or more values of the first parameter, the second candidate set includes one or more values of the second parameter, the first parameter and the second parameter are jointly used to determine the element in the first sequence, the first sequence is the z-th order exponential sequence, and z is an integer greater than or equal to 3; and the first communication apparatus determines the one or more parameter value combinations based on the first candidate set and the second candidate set, where each parameter value combination includes one value of the first parameter and one value of the second parameter. It can be learned that the first sequence is a z-th order exponential sequence, and z is an integer greater than or equal to 3. In this way, the first communication apparatus can generate a pilot sequence based on the first sequence, thereby increasing a capacity of the pilot sequence, and meeting a capacity requirement of a communication system. Further, the first communication apparatus determines the one or more parameter value combinations based on the first candidate set and the second candidate set, so that the first communication apparatus selects a corresponding parameter value combination from the one or more parameter value combinations to generate the first sequence, and generate the pilot sequence based on the first sequence. This helps ensure PAPR performance or CM performance of the pilot sequence.

### BRIEF DESCRIPTION OF DRAWINGS

FIG. 1 is a diagram of a communication system according to an embodiment of this application;
FIG. 2 is a diagram of an embodiment of a determining method according to an embodiment of this application;
FIG. 3 is a diagram of an embodiment of a pilot sequence sending method according to an embodiment of this application;
FIG. 4 is a diagram of a structure of a communication apparatus according to an embodiment of this application;
FIG. 5 is a diagram of another structure of a communication apparatus according to an embodiment of this application;
FIG. 6 is a diagram of a structure of a terminal device according to an embodiment of this application; and
FIG. 7 is a diagram of a structure of a network device according to an embodiment of this application.

### DESCRIPTION OF EMBODIMENTS

Embodiments of this application provide a determining method and a related apparatus, so that a first communication apparatus determines a first candidate set and a second candidate set. The first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3. The first communication apparatus determines one or more parameter value combinations based on the first candidate set and the second candidate set, where each parameter value combination includes one value of the first parameter and one value of the second parameter. In this way, the first communication apparatus can generate a pilot sequence based on the first sequence, thereby increasing a capacity of the pilot sequence, and meeting a capacity requirement of a communication system. Further, the first communication apparatus determines the one or more parameter value combinations based on the first candidate set and the second candidate set, so that the first communication apparatus selects a corresponding parameter value combination from the one or more parameter value combinations to generate the first sequence, and generate the pilot sequence based on the first sequence. This helps ensure PAPR performance or CM performance of the pilot sequence.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In wireless communication, the most important and challenging task is to cope with variability and uncertainty in a wireless transmission environment. For a transmitting side, an efficient communication scheme can achieve better utilization of instantaneous channel information and implement appropriate information and/or signal preprocessing at the transmitting side, so that transmission of the transmitter can match an instantaneous channel capacity. This problem is more important and complex in multi-user communication and multi-antenna communication.

To implement this function, the instantaneous channel information needs to be obtained at the transmitting side before transmission. It is clear that the more accurate the instantaneous channel information obtained at the transmitting side is, the better. A most common manner of obtaining the instantaneous channel information is channel measurement. In a time division multiplexing system, because a channel from the transmitting side to a receiving side has good reciprocity with a channel from the receiving side to the transmitting side, instantaneous channel information may be obtained at the transmitting side by estimating the channel from the receiving side to the transmitting side at the transmitting side. In a cellular communication network, a terminal device transmits a reference signal to a base station, so that the base station obtains instantaneous channel information between the terminal device and the base station by measuring the reference signal. The reference signal may be an SRS.

Because a cellular network needs to be networked to serve a plurality of users, when the terminal device sends the SRS, the SRS needs to support a specific capacity, and correlation between SRSs is good, to avoid interference between SRSs corresponding to a terminal device in a cell and a terminal device in another cell. Specifically, when a base station simultaneously receives SRSs of a plurality of terminal devices in a local cell, if a plurality of SRSs occupy non-orthogonal time-frequency resources, and without loss of generality, assuming that two SRSs occupy a same time-frequency resource, there is a lower correlation between the two SRSs. This indicates that when each of the SRSs is decoded to estimate a channel between the terminal device corresponding to the SRS and the base station, interference caused by the other SRS to a currently being decoded SRS is lower, and a channel between the terminal device and the base station can be obtained as real as possible by using the currently being decoded SRS.

For the receiver, to achieve correct reception and demodulation of data, the instantaneous channel information also needs to be obtained. This can be implemented by transmitting, on some specific time-frequency resources in transmission, specific information that is known to both the transmitter and the receiver. A signal carrying the information may be referred to as a DMRS. At the receiving side, on a time-frequency resource corresponding to the DMRS, because information transmitted by the DMRS is known, a channel through which the DMRS passes, namely, a channel from the transmitting side to the receiving side, can be obtained through decoding.

With the development of multi-antenna technologies and increase of multi-user requirements, a quantity of pilots that need to be used simultaneously is growing. Therefore, there is an increasingly strong demand for large-capacity pilot sequences. In NR R15, methods for generating SRS sequences and DMRS sequences (both the SRS sequences and the DMRS sequences may be referred to as pilot sequences) are specified. During the research and standardization processes of R16 to R19, there are almost always corresponding research topics or standard topics aimed at enhancing capacities of SRSs and DMRSs, and PAPR performance and/or CM performance of the SRSs and DMRSs are also concerned. Currently, a terminal device may generate pilot sequences by using ZC sequences. Specifically, the terminal device performs truncation or cyclic shift extension on the ZC sequences to obtain the pilot sequences. Although the ZC sequences have advantages in terms of PAPR performance or CM performance, the ZC sequences have a small capacity, and it is difficult to meet capacity requirements of communication systems. This application provides a corresponding technical solution. A first communication apparatus determines a first candidate set and a second candidate set. The first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3. In this way, the first communication apparatus can generate a pilot sequence based on the first sequence, thereby increasing a capacity of the pilot sequence, and meeting a capacity requirement of a communication system. The first communication apparatus determines one or more parameter value combinations based on the first candidate set and the second candidate set, where each parameter value combination includes one value of the first parameter and one value of the second parameter. Further, it is convenient for the first communication apparatus to select a corresponding parameter value combination from the one or more parameter value combinations to generate the first sequence, and generate the pilot sequence based on the first sequence. This helps ensure PAPR performance or CM performance of the pilot sequence. For details, refer to related descriptions in the following embodiments.

The technical solutions of this application may be applied to a cellular communication system related to the 3rd generation partnership project (3rd generation partnership project, 3GPP), for example, a fourth generation (4th generation, 4G) communication system, a 5G communication system, or a communication system after the fifth generation communication system, for example, a sixth generation communication system. For example, the fourth generation communication system may include a long term evolution (long term evolution, LTE) communication system. The fifth generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, or a vehicle-to-everything (vehicle-to-everything, V2X) communication system.

A communication system to which the technical solutions provided in this application are applicable includes a first communication apparatus and a second communication apparatus. The first communication apparatus and the second communication apparatus perform the technical solutions in this application. The first communication apparatus is a network device, and the second communication apparatus is a terminal device, or the first communication apparatus is a terminal device, and the second communication apparatus is a network device.

The following describes a terminal device and a network device in this application.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal (for example, an uncrewed aerial vehicle or a vehicle) in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self-driving may be an uncrewed aerial vehicle, a helicopter, or an airplane. For example, a wireless terminal in vehicle-to-everything may be a vehicle-mounted device, an entire vehicle device, a vehicle-mounted module, a vehicle, or a ship. The wireless terminal in the industrial control may be a camera, a robot, a robotic arm, or the like. The wireless terminal in the smart home may be a television, an air conditioner, a sweeper, a sound box, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is an apparatus that is deployed in a radio access network and that provides a wireless communication function for the terminal device. The network device may be a radio access network (radio access network, RAN) node that enables the terminal device to access the wireless network, and may also be referred to as an access network device, a RAN entity, an access node, a network node, a communication apparatus, or the like.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a network device in a 5G mobile communication system, for example, a next generation NodeB (next generation NodeB, gNB), a TRP, or a TP in an NR system, or one antenna panel or a group of antenna panels (including a plurality of antenna panels) of a base station in a 5G mobile communication system. Alternatively, the network device may be a network node that forms a gNB or a transmission point, for example, a baseband unit (baseband unit, BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of a radio resource control (radio resource control, RRC) protocol layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, higher layer signaling (for example, RRC layer signaling) may be considered as being sent by the DU or sent by the DU and the AAU.

It may be understood that a network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be noted that the network device may be a device or an apparatus with a chip, a device or an apparatus integrated with a circuit, or a chip, a module, or a control unit in the device or the apparatus shown above. This is not specifically limited in this application.

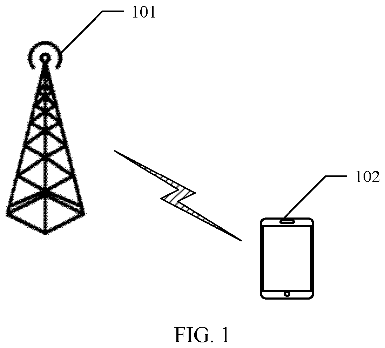

FIG. 1 is a diagram of a communication system according to an embodiment of this application. As shown in FIG. 1, the communication system includes a base station 101 and a terminal device 102. The base station 101 may send a DMRS to the terminal device 102, and the terminal device 102 may measure the DMRS to obtain quality of a channel between the base station 101 and the terminal device 102. Alternatively, the terminal device 102 may send an SRS to the base station 101, and the base station 101 may measure the SRS to obtain quality of a channel between the terminal device 102 and the base station 101.

It should be noted that FIG. 1 describes only a scenario in which an SRS or a DMRS is transmitted between the base station 101 and the terminal device 102. In actual application, this application is also applicable to a scenario in which a synchronization signal, a scrambled signal, or the like is transmitted between the base station 101 and the terminal device 102. A specific scenario to which this application is applicable is not limited.

The following describes the technical solutions of this application with reference to specific embodiments.

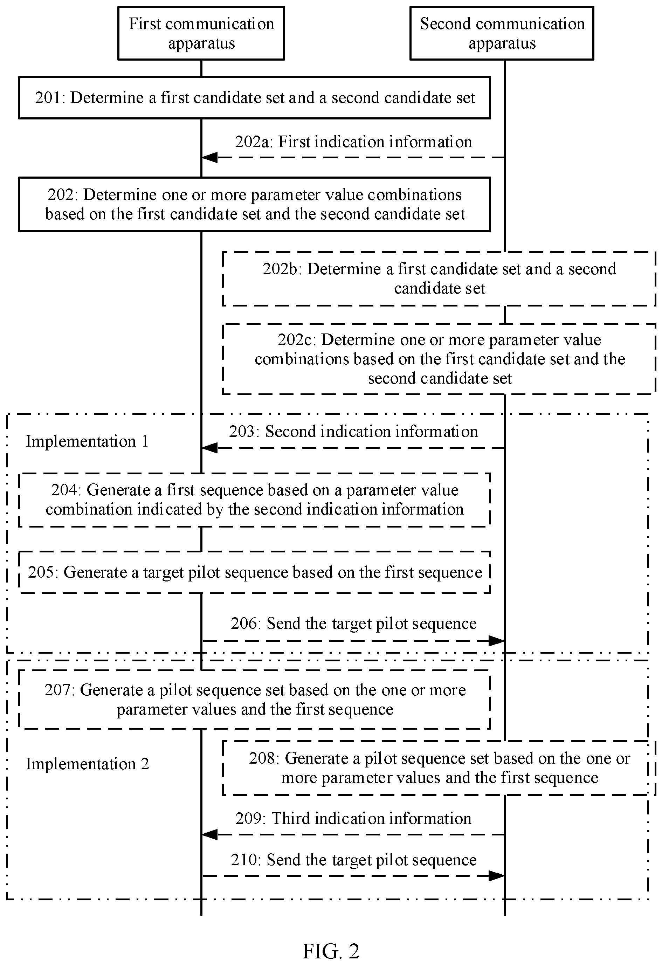

FIG. 2 is a diagram of an embodiment of a determining method according to an embodiment of this application. Refer to FIG. 2. The method includes the following steps.

201: A first communication apparatus determines a first candidate set and a second candidate set.

The first candidate set includes one or more values of a first parameter. The second candidate set includes one or more values of a second parameter. The first parameter and the second parameter are jointly used to determine an element in a first sequence, the first sequence is a z-th order exponential sequence, and z is an integer greater than or equal to 3. For example, the first sequence is a cubic exponential sequence, a quartic exponential sequence, or a quintic exponential sequence.

Optionally, the first parameter and the second parameter are jointly used to determine a phase of the element in the first sequence.

Optionally, the first parameter is a coefficient of an x-th order term, with respect to a position index variable n, used for generating a phase in the first sequence; and the first parameter is an integer. The second parameter is a coefficient of a y-th order term, with respect to the position index variable n, used for generating the phase in the first sequence; and the second parameter is an integer. x is an integer greater than or equal to 2, y is an integer greater than or equal to 2, and x is greater than y. For example, the first sequence is a cubic exponential sequence, and may be specifically represented as $z \left(n\right) = {e}^{- j 2 π \left(\frac{{an}^{3}}{N}+\frac{{bn}^{2}}{M}+\frac{cn}{K}+d\right)}$ or $z \left(n\right) = {e}^{- j 2 π \left(\frac{{an}^{3}}{N}+\frac{b \left({n}^{2}+{c}_{0}n\right)}{M}+\frac{c ′ n}{K ′}+d\right)}$, and 0 ≤ *n* ≤ *P* - 1. P = L, or P < L, and L is a length of a pilot sequence. The first parameter may be a, and the second parameter may be b. Certainly, the first parameter may be $\frac{a}{N}$, and the second parameter may be $\frac{b}{M}$. Both $\frac{a}{N}$ and $\frac{b}{M}$ may be integers or non-integers.

The following describes value ranges respectively corresponding to N and M in the first sequence.

N is a period of the x-th order term, with respect to the position index variable n, used for generating the phase in the first sequence, and N is an integer. N is a largest prime number not greater than L or a smallest prime number not less than L. For example, the first sequence is a cubic exponential sequence, and N is a period of a cubic term, with respect to the position index variable n, used for generating the phase in the first sequence.

M is a period of the y-th order term, with respect to the position index variable n, used for generating the phase in the first sequence; and M is an integer. For example, the first sequence is a cubic exponential sequence; and M is a period of a quadratic term, with respect to the position index variable n, used for generating the phase in the first sequence. In a possible implementation, M = N. In another possible implementation, M is a prime number not equal to N. In still another possible implementation, M = 2N. In yet another possible implementation, *M* = *sm*², where both s and m are prime numbers.

Optionally, the value of the first parameter in the first candidate set belongs to an interval (0, N-1]. N is the period of the x-th order term, with respect to the position index variable n, used for generating the phase in the first sequence. Optionally, the value of the first parameter is an integer, that is, the value of the first parameter may be an integer belonging to the interval (0, N-1].

The following describes some possible implementations of the value of the second parameter in the second candidate set.

Implementation 1: The value of the second parameter in the second candidate set belongs to an interval (0, M-1].

Implementation 2: The value of the second parameter in the second candidate set belongs to an interval (0, N-1].

In this implementation, generally, N is a factor of M. For example, M = 2N.

Implementation 3: The value of the second parameter in the second candidate set belongs to an interval (0, m-1], where m is a prime number.

In this implementation, *M* = *sm*².

Optionally, the value of the second parameter is an integer, that is, the value of the second parameter may be an integer belonging to the intervals shown in Implementation 1 to Implementation 3.

202: The first communication apparatus determines one or more parameter value combinations based on the first candidate set and the second candidate set.

Each of the one or more parameter value combinations includes one value of the first parameter and one value of the second parameter.

Optionally, the one or more parameter value combinations may be a subset of all parameter value combinations including all values of the first parameter in the first candidate set and all values of the second parameter in the second candidate set.

Optionally, each of the one or more parameter value combinations meets a first target condition.

Optionally, that each of the one or more parameter value combinations meets the first target condition includes: among all the values of the first parameter in the first candidate set and all the values of the second parameter in the second candidate set, Q parameter value combinations corresponding to first Q values that minimize a value of a target function. Q is an integer greater than or equal to 1.

The target function is a function related to a PAPR or a function related to a CM. That is, the target function is a function representing the PAPR or the CM.

In a possible implementation, the first sequence is represented as *z*(*n*), the position index variable n in the first sequence belongs to an interval [0, P-1], 0 ≤ *n* ≤ *P* - 1, P = L, and L is a length of a pilot sequence. The first communication apparatus determines *sₒ*(*n*) based on *z*(*n*), aiming at adjusting a length of *z*(*n*) to L. Because P = L, *sₒ*(*n*) = *z*(*n*)*.* The target function is represented as *f*(*sₒ*(*n*))*.*

Generally, when calculating a value of *f*(*sₒ*(*n*)), the first communication apparatus may ignore a linear term and a constant term in a phase of *z*(*n*). For example, if the first sequence is a cubic exponential sequence, and the first sequence is represented as $z \left(n\right) = {e}^{- j 2 π \left(\frac{{an}^{3}}{N}+\frac{{bn}^{2}}{M}+\frac{cn}{K}+d\right)} , {s}_{o} \left(n\right) = {e}^{- j 2 π \left(\frac{{an}^{3}}{N}+\frac{{bn}^{2}}{M}\right)}$ , and 0 ≤ *n* ≤ *P* - 1. Because P *=* L, ${s}_{o} \left(n\right) = {e}^{- j 2 π \left(\frac{{an}^{3}}{N}+\frac{{bn}^{2}}{M}\right)}$, and 0 ≤*n* ≤ *L* - 1.

The first communication apparatus determines the one or more parameter value combinations from all the values of the first parameter in the first candidate set and all the values of the second parameter in the second candidate set based on the target function *f*(*sₒ*(*n*)). In other words, the first communication apparatus aims at selecting a specific quantity of one or more parameter value combinations that optimize performance of the target function. Specifically, it may be represented as: ${\left(a, b\right)}_{Q} = {arg}_{a , b} {min}_{Q} \left(f\left({s}_{o}\left(n\right)\right)\right)$ Formula 1

(*a,b*)*_{Q}* represents Q combinations (a, b), and ${arg}_{a , b} {min}_{Q} \left(f\left({s}_{o}\left(n\right)\right)\right)$ represents Q combinations (a, b) corresponding to Q values that minimize a value of the target function *f*(*sₒ*(*n*)), among all values of a in the first candidate set and all values of b. That is, values of the target function *f*(*sₒ*(*n*)) that correspond to the Q combinations (a, b) are not greater than a value of the target function *f*(*sₒ*(*n*)) that corresponds to another combination (a, b).

The target function *f*(*sₒ*(*n*)) may be a function related to a PAPR, so that the selected Q combinations (a, b) minimize a corresponding PAPR of *sₒ*(*n*)*.* Optionally, *f*(*sₒ*(*n*)) may also be represented as *PAPR*(*sₒ*(*n*)).

Based on definition of the PAPR, the following describes several possible representations of the target function *f*(*sₒ*(*n*)). This application is still applicable to another representation. This is not specifically limited in this application.

In a possible implementation, *f*(*sₒ*(*n*)) may be represented as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 πnk}{R}}\right)}^{D}$ Formula 2

*sₒ*(*n*) = *z*(*n*)*, z*(*n*) is the first sequence, the position index variable n in the first sequence belongs to an interval [0, P-1], P = L, and L is a length of a pilot sequence. R represents a quantity of sampling points for sampling a time domain signal generated by using *sₒ*(*n*), and R is a positive number. C is a positive number. For example, C = 1, or $C = \frac{1}{\sqrt{R}}$. D is a positive number. For example, D = 1, or D = 2. N is a largest prime number not greater than L or a smallest prime number not less than L. In this implementation, the first sequence may also be referred to as a base sequence.

In another possible implementation, *f*(*sₒ*(*n*)) may be represented as: $f \left({s}_{o}\left(n\right)\right) = {max}_{0 \leq θ < 2 π} {\left(C{\sum }_{n = 0}^{N - 1} {s}_{o} \left(n\right) {e}^{j 2 πnθ}\right)}^{D}$ Formula 3

*sₒ*(*n*) = *z*(*n*)*, z*(*n*) is the first sequence, the position index variable n in the first sequence belongs to an interval [0, P-1], P = L, and L is a length of a pilot sequence. C is a positive number. For example, C = 1, or $C = \frac{1}{\sqrt{R}}$. D is a positive number. For example, D = 1, or D = 2. N is a largest prime number not greater than L or a smallest prime number not less than L. In this implementation, the first sequence may also be referred to as a base sequence.

In still another possible implementation, *f*(*sₒ*(*n*)) may be represented as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 π \left(n+\frac{{f}_{c}}{{f}_{o}}\right) k}{R}}\right)}^{D}$ Formula 4

*sₒ*(*n*) = *z*(*n*)*, z(n)* is the first sequence, the position index variable n in the first sequence belongs to an interval [0, P-1], P = L, and L is a length of a pilot sequence. R represents a quantity of sampling points for sampling a time domain signal generated by using *sₒ*(*n*), and R is a positive number. C is a positive number. For example, C = 1, or $C = \frac{1}{\sqrt{R}}$. D is a positive number. For example, D = 1, or D = 2. N is a largest prime number not greater than L or a smallest prime number not less than L. f_{c} is a frequency of a carrier to which the pilot sequence is mapped, and fₒ is a center frequency of the carrier.

In still another possible implementation, *f*(*sₒ*(*n*)) may be represented as: $f \left({s}_{o}\left(n\right)\right) = {max}_{0 \leq θ < 2 π} {\left(C{\sum }_{n = 0}^{N - 1} {s}_{o} \left(n\right) {e}^{j 2 π \left(n+\frac{{f}_{C}}{{f}_{O}}\right) θ}\right)}^{D}$ Formula 5

*sₒ*(*n*) = *z*(*n*)*, z*(*n*) is the first sequence, the position index variable n in the first sequence belongs to an interval [0, P-1], P = L, and L is a length of a pilot sequence. C is a positive number. For example, C = 1, or $C = \frac{1}{\sqrt{R}}$. D is a positive number. For example, D = 1, or D = 2. N is a largest prime number not greater than L or a smallest prime number not less than L. f_{c} is a frequency of a carrier to which the pilot sequence is mapped, and fₒ is a center frequency of the carrier.

In Formula 2 to Formula 5, R may be predefined in a protocol, or may be configured and indicated by using indication information. This is not specifically limited in this application. Generally, *R* ≥ *L*. Specially, *R* ≥ 4*L*.

Based on definition of CM performance, the following describes several possible representations of the target function *f*(*sₒ*(*n*)). This application is still applicable to another representation. This is not specifically limited in this application.

In a possible implementation, *f*(*sₒ*(*n*)) may be represented as follows: $f \left({s}_{o}\left(n\right)\right) = \frac{RCM \left[s\left(t\right)\right] {\left|- dB{RCM}_{ref}\right|}_{dB}}{C}$ Formula 6

*sₒ*(*n*) = *z*(*n*), *z*(*n*) is the first sequence, the position index variable n in the first sequence belongs to an interval [0, P-1], P = L, and L is a length of a pilot sequence. *RCM_{ref}*|*_{dB}* and *C* are both constants.

In a possible implementation, *RCM*[*s*(*t*)]|*_{dB}* may be defined in a continuous form, and may be specifically represented as ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$. *rms*(*u*) represents taking a root mean square of u, and *s(t)* is a time domain signal generated by using *sₒ*(*n*), that is, $s \left(t\right) = {\sum }_{n = 0}^{N - 1} {s}_{o} \left(n\right) {e}^{\frac{j 2 πnt}{R}}$.

In another possible implementation, *RCM*[*s*(*t*)]|*_{dB}* may be defined in a discrete form, and may be specifically represented as ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$. *rms*(*u*) represents taking a root mean square of u, and $s \left(n\right) = {\sum }_{n = 0}^{N - 1} {s}_{o} \left(n\right) {e}^{\frac{j 2 πnk}{R}}$ .

Generally, if M is far greater than N, the parameter value combinations corresponding to the Q values that minimize the value of the target function are selected by using the foregoing target function, and the parameter value combination is used to determine the first sequence, where the first sequence may be used to generate the pilot sequence. This helps improve PAPR performance or CM performance of the pilot sequence. Further, the target function may be a function related to PAPR performance or CM performance, which helps further improve the PAPR performance or the CM performance of the pilot sequence.

In another possible implementation, the first sequence is represented as *sₒ*(*n*)*,* where the position index variable n in the first sequence belongs to an interval [0, P-1], 0 ≤ *n* ≤ *P -* 1, P < L, and L is a length of a pilot sequence. Optionally, P = *min*(*N,M*) or *P = max*(*N,M*)*.*

The first communication apparatus determines *sₒ*(*n*) based on *z(n),* aiming at adjusting a length of *z*(*n*) to L. Because P < L, how to extend *z(n)* to *sₒ*(*n*) needs to be considered. When 0 ≤ *n* ≤ *P - 1, sₒ*(*n*) = *z*(*n*). Generally, a linear term and a constant term in a phase of *z(n)* may be ignored in *sₒ*(*n*)*.* For example, the first sequence is a cubic exponential sequence, ${s}_{o} \left(n\right) = {e}^{- j 2 π \left(\frac{{an}^{3}}{N}+\frac{{bn}^{2}}{M}\right)}$, and 0 ≤ *n* ≤ *P* - 1. *sₒ*(*n*) may be represented as: ${s}_{o} \left(n\right) = \left\{\begin{matrix}z \left(n\right) , 0 \leq n \leq P - 1 \\ t \left(n-P\right) , P \leq n \leq L - 1\end{matrix}\right.$ Formula 7

Let *i* = *n - P* , and a specific form of t(i) may be expressed as: $\left(t\left(0\right),t\left(1\right),…,t\left(L-P-1\right)\right) = {arg}_{t \left(0\right) , t \left(1\right) , … , t \left(L-P-1\right)} min \left(f\left(\left[z\left(0\right),z\left(1\right),…,z\left(P-1\right),t\left(0\right),t\left(1\right),…,t\left(L-P-1\right)\right]\right)\right)$ .

(*t*(0), *t*(1), ... , *t*(*L-P -* 1) represents a combination (*t*(0), *t*(1), ... , *t*(*L - P -* 1)), and ${arg}_{t \left(0\right) , t \left(1\right) , … , t \left(L-P-1\right)} min \left(f\left(\left[z\left(0\right),z\left(1\right),…,z\left(P\right),t\left(0\right),t\left(1\right),…,t\left(L-P-1\right)\right]\right)\right)$ represents a combination (*t*(0)*, t*(1)*, ... , t*(*L - P -* 1)), minimizing a value of the target function *f*(*sₒ*(*n*)), within an interval of all possible values of (*t*(0), *t*(1), ... , *t*(*L - P -* 1)). The ellipsis part includes *t*(2), and *t*(3) to *t*(*t - P* - 2). A value set of *t*(*i*) is ${e}^{- j 2 π \frac{w}{W}}$, where 0 ≤ w ≤ *W* - 1, *W* is an integer, and is usually a positive integer, for example, *W = P* or *W = N.*

The first communication apparatus determines the one or more parameter value combinations from all the values of the first parameter in the first candidate set and all the values of the second parameter in the second candidate set based on the target function *f*(*sₒ*(*n*)). In other words, the first communication apparatus aims at selecting a specific quantity of one or more parameter value combinations that optimize performance of the target function. For details, refer to the related description of Formula 1, where *sₒ*(*n*) in Formula 1 is replaced with *sₒ*(*n*) shown in Formula 7.

The target function *f*(*sₒ*(*n*)) may be a function related to the PAPR or the CM. Specifically, for some possible representations of the target function *f*(*sₒ*(*n*)), refer to Formula 2 to Formula 6. A difference lies in that *sₒ*(*n*) in Formula 2 to Formula 6 is replaced with *sₒ*(*n*) shown in Formula 7.

It should be noted that *z*(*n*) in Formula 2 to Formula 6 may also be generated by a basic sequence and a supplementary sequence. For example, $z \left(n\right) = {e}^{- j 2 π \left(\frac{{an}^{3}}{N}+\frac{{bn}^{2}}{M}+\frac{cn}{K}+d\right)}$, *z*(*n*)= *x*(*n*)*y*(*n*), the basic sequence $x \left(n\right) = {e}^{- j 2 π \frac{{an}^{3}}{N}}$, and the supplementary sequence $y \left(n\right) = {e}^{- j 2 π \left(\frac{{bn}^{2}}{M}+\frac{cn}{K}+d\right)}$ That is, the sequence *z(n)* is obtained by performing element-wise multiplication on *x*(*n*) and *y*(*n*).

Optionally, the one or more parameter value combinations are used to generate a pilot sequence set, the pilot sequence set includes one or more pilot sequences, and one pilot sequence corresponds to one parameter value combination.

The following describes some possible sorting manners of pilot sequences in the pilot sequence set. This application is still applicable to another sorting manner. This is not specifically limited in this application.

Implementation 1: The pilot sequences in the pilot sequence set are sorted in ascending order or descending order of corresponding values of a target function for the parameter value combinations corresponding to the pilot sequences.

For example, Q parameter value combinations include four parameter value combinations: a parameter value combination 1 to a parameter value combination 4. The parameter value combination 1 corresponds to a pilot sequence 1, the parameter value combination 2 corresponds to a pilot sequence 2, the parameter value combination 3 corresponds to a pilot sequence 3, and the parameter value combination 4 corresponds to a pilot sequence 4. A value of the target function for the parameter value combination 1 is a1, a value of the target function for the parameter value combination 2 is a2, a value of the target function for the parameter value combination 3 is a3, and a value of the target function for the parameter value combination 4 is a4. a1 > a3 > a2 > a4. Therefore, the pilot sequence set may be represented as {pilot sequence 1, pilot sequence 3, pilot sequence 2, pilot sequence 4}.

It should be noted that, the foregoing is merely an example, and the pilot sequences in the pilot sequence set may alternatively be sorted in another order of the corresponding values of the target function for the parameter value combinations corresponding to the pilot sequences. This is not specifically limited in this application.

Implementation 2: The pilot sequences in the pilot sequence set are sorted in ascending order or descending order of values of the first parameter in the parameter value combinations corresponding to the pilot sequences, and pilot sequences corresponding to parameter value combinations with a same value of the first parameter are sorted in ascending order or descending order of values of the second parameter in the parameter value combinations with the same value of the first parameter.

For example, Q parameter value combinations include four parameter value combinations: a parameter value combination 1 to a parameter value combination 4. The parameter value combination 1 corresponds to a pilot sequence 1, the parameter value combination 2 corresponds to a pilot sequence 2, the parameter value combination 3 corresponds to a pilot sequence 3, and the parameter value combination 4 corresponds to a pilot sequence 4. The parameter value combination 1 is represented as (a1, b1), the parameter value combination 2 is represented as (a2, b2), the parameter value combination 3 is represented as (a3, b3), and the parameter value combination 4 is represented as (a4, b4). a1 > a2 = a3 > a4, and b1 > b3 > b2 > b4. Therefore, the pilot sequence set may be represented as {pilot sequence 1, pilot sequence 3, pilot sequence 2, pilot sequence 4}.

It should be noted that, the pilot sequences in the pilot sequence set may alternatively be sorted in another order of the values of the first parameter in the parameter value combinations corresponding to the pilot sequences, and the pilot sequences corresponding to the parameter value combinations with the same value of the first parameter may alternatively be sorted in another order of the values of the second parameter in the parameter value combinations with the same value of the first parameter. This is not specifically limited in this application.

Implementation 3: The pilot sequences in the pilot sequence set are sorted in ascending order or descending order of values of the second parameter in the parameter value combinations corresponding to the pilot sequences, and pilot sequences corresponding to parameter value combinations with a same value of the second parameter are sorted in ascending order or descending order of values of the first parameter in the parameter value combinations with the same value of the second parameter.

It should be noted that, the pilot sequences in the pilot sequence set may alternatively be sorted in another order of the values of the second parameter in the parameter value combinations corresponding to the pilot sequences, and the pilot sequences corresponding to the parameter value combinations with the same value of the second parameter may alternatively be sorted in another order of the values of the first parameter in the parameter value combinations with the same value of the second parameter. This is not specifically limited in this application.

The foregoing shows the implementations in which the first sequence is used to generate a pilot sequence. In actual application, the first sequence in this application may alternatively be used to generate another type of sequence. This is not specifically limited in this application. For example, the first sequence may alternatively be used to generate a synchronization sequence or a scrambling sequence. For the synchronization sequence or the scrambling sequence, the foregoing target function may be a function related to related performance.

It should be noted that, Q may be predefined in a protocol, or Q may be determined by L, or a plurality of preset values may be predefined in a protocol and indicated by indication information. This is not specifically limited in this application.

It should be noted that the target function may be predefined in a protocol, or a candidate set of target functions may be predefined in a protocol and indicated by indication information. The following describes this implementation with reference to step 202a.

Optionally, the embodiment shown in FIG. 2 further includes step 202a. Step 202a may be performed before step 202.

202a: A second communication apparatus sends first indication information to the first communication apparatus, and correspondingly, the first communication apparatus receives the first indication information from the second communication apparatus.

The first indication information indicates the target function.

Optionally, the first indication information may be carried on a physical broadcast channel. Optionally, the first indication information is carried in DCI, a MAC CE, or an RRC message.

Optionally, the embodiment shown in FIG. 2 further includes step 202b and step 202c.

202b: The second communication apparatus determines a first candidate set and a second candidate set.

202c: The second communication apparatus determines one or more parameter value combinations based on the first candidate set and the second candidate set.

Step 202b and step 202c are similar to step 201 and step 202 in the embodiment shown in FIG. 2. For details, refer to related descriptions of step 201 and step 202 in the embodiment shown in FIG. 2. Details are not described herein again.

Optionally, if the embodiment shown in FIG. 2 further includes step 202a, there is no fixed execution sequence between step 202a and steps 202b and 202c. Steps 202b and 202c may be performed first, and then step 202a may be performed; or step 202a may be performed first, and then steps 202b and 202c may be performed; or steps 202b and 202c and step 202a may be performed at the same time based on situations. This is not specifically limited in this application.

It should be noted that steps 202b and 202c are merely an example implementation. In actual application, after the first communication apparatus determines the one or more parameter value combinations, the first communication apparatus may send the one or more parameter value combinations to the second communication apparatus.

In a possible implementation, after the second communication apparatus determines the one or more parameter value combinations, the second communication apparatus may indicate one of the parameter value combinations to the first communication apparatus. The following provides descriptions with reference to step 203.

Optionally, the embodiment shown in FIG. 2 further includes step 203. Step 203 may be performed after step 202.

203: The second communication apparatus sends second indication information to the first communication apparatus, and correspondingly, the first communication apparatus receives the second indication information from the second communication apparatus.

The second indication information indicates one of the one or more parameter value combinations.

Optionally, the second indication information indicates an index of the parameter value combination, or the second indication information indicates a value of the first parameter and a value of the second parameter in the parameter value combination.

Optionally, the second indication information is carried in DCI, a MAC CE, or an RRC message.

It should be noted that, if the embodiment shown in FIG. 2 further includes step 202b and step 202c, step 203 may be performed after step 202c.

Optionally, the embodiment shown in FIG. 2 further includes step 204 to step 206. Step 204 to step 206 may be performed after step 203.

204: The first communication apparatus generates a first sequence based on the parameter value combination indicated by the second indication information.

Specifically, the first communication apparatus determines the first sequence based on the value of the first parameter and the value of the second parameter in the parameter value combination.

205: The first communication apparatus generates a target pilot sequence based on the first sequence.

Optionally, the second indication information further indicates at least one of the following: a value of a third parameter, a value of a fourth parameter, or a value of a fifth parameter. The third parameter indicates a quantity of cyclic shifts corresponding to the target pilot sequence, the fourth parameter indicates an index of a cyclic shift used by the target pilot sequence, and the fifth parameter indicates a same constant phase rotation added to each element in the target pilot sequence.

Optionally, the first communication apparatus generates the first sequence based on the parameter value combination indicated by the second indication information and at least one of the value of the third parameter, the value of the third parameter, and the value of the fifth parameter.

206: The first communication apparatus sends the target pilot sequence to the second communication apparatus, and correspondingly, the second communication apparatus receives the target pilot sequence from the first communication apparatus.

Specifically, the first communication apparatus generates a pilot signal on a predetermined time-frequency resource based on the target pilot sequence by using a corresponding waveform.

In a possible implementation, the first communication apparatus is a terminal device, the second communication apparatus is a network device, and the target pilot sequence is an SRS sequence. The network device may measure the SRS sequence, to complete sounding and/or estimation of an uplink channel from the terminal device to the network device. Optionally, due to reciprocity between a downlink channel from the network device to the terminal device and the uplink channel from the terminal device to the network device, the network device may estimate the downlink channel based on an estimation result of the uplink channel.

In another possible implementation, the first communication apparatus is a network device, the second communication apparatus is a terminal device, and the target pilot sequence is a DMRS sequence. The terminal device measures the DMRS sequence, to complete sounding and/or estimation of a downlink channel from the network device to the terminal device. Optionally, due to reciprocity between an uplink channel from the terminal device to the network device and the downlink channel from the network device to the terminal device, the terminal device may estimate the uplink channel based on an estimation result of the downlink channel.

In another possible implementation, the first communication apparatus and the second communication apparatus may separately determine a pilot sequence set based on the one or more parameter value combinations. Then, the second communication apparatus may indicate one of pilot sequences to the first communication apparatus. Optionally, the embodiment shown in FIG. 2 further includes step 207. Step 207 may be performed after step 202.

207: The first communication apparatus generates a pilot sequence set based on the one or more parameter value combinations and the first sequence.

The pilot sequence set includes one or more pilot sequences, one pilot sequence corresponds to one parameter value combination, and different pilot sequences correspond to different parameter value combinations. For some possible sorting manners of the pilot sequences in the pilot sequence set, refer to the foregoing related descriptions. Details are not described herein again.

Optionally, the embodiment shown in FIG. 2 further includes step 208.

208: The second communication apparatus generates a pilot sequence set based on the one or more parameter value combinations and the first sequence.

Step 208 is similar to step 207. For details, refer to related descriptions of step 207. Details are not described herein again.

Optionally, there is no fixed execution sequence between step 207 and step 208. Step 207 may be performed before step 208, or step 208 may be performed before step 207, or step 207 and step 208 may be performed at the same time based on situations. This is not specifically limited in this application.

It should be noted that step 208 is merely an example implementation. In actual application, after the first communication apparatus determines the pilot sequence set, the first communication apparatus may send the pilot sequence set to the second communication apparatus.

Optionally, the embodiment shown in FIG. 2 further includes step 209. Step 209 may be performed after step 208.

209: The second communication apparatus sends third indication information to the first communication apparatus, and correspondingly, the first communication apparatus receives the third indication information from the second communication apparatus.

The third indication information indicates a target pilot sequence, and the target pilot sequence is a pilot sequence in the pilot sequence set.

Optionally, the third indication information indicates an index of the target pilot sequence.

Optionally, the embodiment shown in FIG. 2 further includes step 210. Step 210 may be performed after step 209.

210: The first communication apparatus sends the target pilot sequence to the second communication apparatus, and correspondingly, the second communication apparatus receives the target pilot sequence from the first communication apparatus.

Step 210 is similar to step 206. For details, refer to related descriptions of step 206. Details are not described herein again.

In this embodiment of this application, the first communication apparatus determines the first candidate set and the second candidate set, where the first candidate set includes the one or more values of the first parameter, the second candidate set includes the one or more values of the second parameter, the first parameter and the second parameter are jointly used to determine the element in the first sequence, the first sequence is the z-th order exponential sequence, and z is an integer greater than or equal to 3; and the first communication apparatus determines the one or more parameter value combinations based on the first candidate set and the second candidate set, where each parameter value combination includes one value of the first parameter and one value of the second parameter. It can be learned that the first sequence is a z-th order exponential sequence, and z is an integer greater than or equal to 3. In this way, the first communication apparatus can generate a pilot sequence based on the first sequence, thereby increasing a capacity of the pilot sequence, and meeting a capacity requirement of a communication system. Further, the first communication apparatus determines the one or more parameter value combinations based on the first candidate set and the second candidate set, so that the first communication apparatus selects a corresponding parameter value combination from the one or more parameter value combinations to generate the first sequence, and generate the pilot sequence based on the first sequence. This helps ensure PAPR performance or CM performance of the pilot sequence.

It should be noted that the embodiment shown in FIG. 2 shows only an implementation in which the first communication apparatus determines the parameter value combination including the first parameter and the second parameter. In actual application, for another parameter in the first sequence, the first communication apparatus may also determine some values of the another parameter in a similar manner. This is not specifically limited in this application. That is, the parameter value combination may include more parameters. For example, the first sequence is $z \left(n\right) = {e}^{- j 2 π \left(\frac{{an}^{3}}{N}+\frac{{bn}^{2}}{M}+\frac{cn}{K}+d\right)}$, the first parameter is a, and the second parameter is b. The first communication apparatus may also determine, in a similar manner, some possible values respectively corresponding to c and d in the first sequence. For another example, the first sequence is a quartic exponential sequence; the first parameter is a coefficient of a cubic term, with respect to a position index variable n, used for generating a phase in the first sequence; and the second parameter is a coefficient of a quadratic term, with respect to the position index variable n, used for generating the phase in the first sequence. The first communication apparatus may also determine, in a similar manner, a coefficient of a quartic term, with respect to the position index variable n, used for generating the phase in the first sequence.

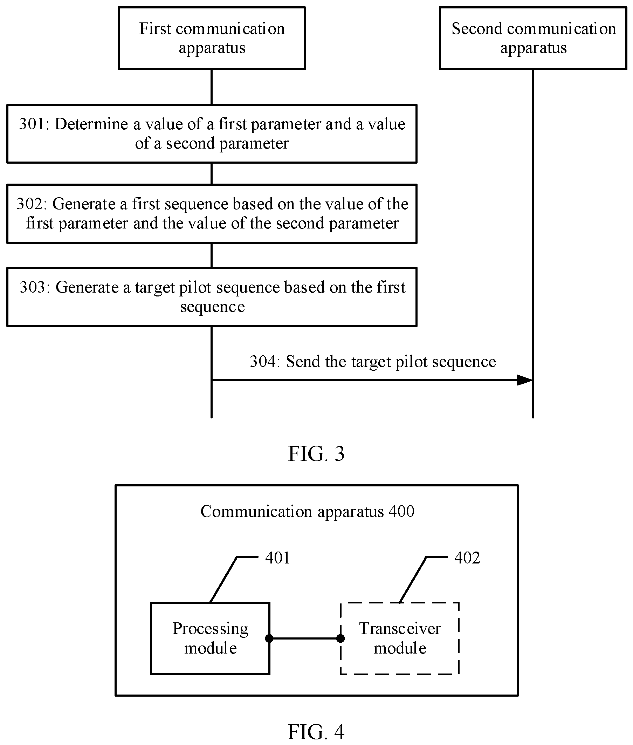

This application further provides another embodiment. For details, refer to FIG. 3. FIG. 3 is a diagram of an embodiment of a pilot sequence sending method according to an embodiment of this application. The method includes the following steps.

301: A first communication apparatus determines a value of a first parameter and a value of a second parameter.

The value of the first parameter is a value of the first parameter in a target parameter value combination, and the value of the second parameter is a value of the second parameter in the target parameter value combination. The target parameter value combination belongs to one or more parameter value combinations, and the one or more parameter value combinations are determined based on the first candidate set and the second candidate set. The first candidate set includes one or more values of the first parameter, and the second candidate set includes one or more values of the second parameter. For the first candidate set and the second candidate set, refer to related descriptions in the embodiment shown in FIG. 2. For the one or more parameter value combinations, refer to related descriptions in the embodiment shown in FIG. 2.

Optionally, that the first communication apparatus determines the value of the first parameter and the value of the second parameter includes: The first communication apparatus receives fourth indication information from the second communication apparatus, where the fourth indication information indicates the target parameter value combination.

302: The first communication apparatus generates a first sequence based on the value of the first parameter and the value of the second parameter.

Step 302 is similar to step 204 in the embodiment shown in FIG. 2 above. For details, refer to related descriptions of step 204 in the embodiment shown in FIG. 2 above. Details are not described herein again.

303: The first communication apparatus generates a target pilot sequence based on the first sequence.

Step 303 is similar to step 205 in the embodiment shown in FIG. 2. For details, refer to related descriptions of step 205 in the embodiment shown in FIG. 2. Details are not described herein again.

304: The first communication apparatus sends the target pilot sequence to the second communication apparatus, and correspondingly, the second communication apparatus receives the target pilot sequence from the first communication apparatus.

Step 304 is similar to step 206 in the embodiment shown in FIG. 2. For details, refer to related descriptions of step 206 in the embodiment shown in FIG. 2. Details are not described herein again.

It can be learned that the first sequence is a z-th order exponential sequence, and z is an integer greater than or equal to 3. The first communication apparatus generates the target pilot sequence based on the first sequence, thereby increasing a capacity of the target pilot sequence, and meeting a capacity requirement of a communication system. Further, the one or more parameter value combinations are determined based on the first candidate set and the second candidate set, and a target parameter value is one of the one or more parameter value combinations. This helps ensure PAPR performance or CM performance of the target pilot sequence.

The following describes communication apparatuses provided in embodiments of this application.

FIG. 4 is a diagram of a structure of a communication apparatus according to an embodiment of this application. As shown in FIG. 4, a communication apparatus 400 may be configured to perform processes performed by the first communication apparatus or the second communication apparatus in embodiments shown in FIG. 2 and FIG. 3. For details, refer to related descriptions in the foregoing method embodiments.

The communication apparatus 400 includes a processing module 401. Optionally, the communication apparatus 400 further includes a transceiver module 402.

The processing module 401 is configured to process data. The transceiver module 402 may implement a corresponding communication function. The transceiver module 402 may also be referred to as a communication interface or a communication module.

Optionally, the communication apparatus 400 may further include a storage module, and the storage module may be configured to instructions and/or data. The processing module 401 may read the instructions and/or the data in the storage module, to enable the communication apparatus to implement the foregoing method embodiment.

In a possible implementation, the communication apparatus 400 may be configured to perform an action performed by the first communication apparatus in the foregoing method embodiments. The communication apparatus 400 may be the first communication apparatus or a component that may be disposed in the first communication apparatus. The processing module 401 is configured to perform a processing-related operation on a first communication apparatus side in the foregoing method embodiments. The transceiver module 402 is configured to perform a receiving-related operation on the first communication apparatus side in the foregoing method embodiments. For example, the communication apparatus 400 is configured to perform the following solution.

The processing module 401 is configured to: determine a first candidate set and a second candidate set, where the first candidate set includes one or more values of a first parameter, the second candidate set includes one or more values of a second parameter, the first parameter and the second parameter are jointly used to determine an element in a first sequence, the first sequence is a z-th order exponential sequence, and z is an integer greater than or equal to 3; and determine one or more parameter value combinations based on the first candidate set and the second candidate set, where each parameter value combination includes one value of the first parameter and one value of the second parameter.

In another possible implementation, the communication apparatus 400 may be configured to perform an action performed by the second communication apparatus in the foregoing method embodiments. The communication apparatus 400 may be the second communication apparatus or a component that may be disposed in the second communication apparatus. The processing module 401 is configured to perform a processing-related operation on a second communication apparatus side in the foregoing method embodiments. The transceiver module 402 is configured to perform a receiving-related operation on the second communication apparatus side in the foregoing method embodiments.

Optionally, the transceiver module 402 may include a sending module and a receiving module. The sending module is configured to perform the sending operation in the foregoing method embodiments. The receiving module is configured to perform the receiving operation in the foregoing method embodiments.

It should be noted that the communication apparatus 400 may include the sending module, but does not include the receiving module. Alternatively, the communication apparatus 400 may include the receiving module, but does not include the sending module. This may be specifically determined based on whether the foregoing solution performed by the communication apparatus 400 includes a sending action and a receiving action.

Optionally, the communication apparatus 400 is configured to perform actions performed by the first communication apparatus or the second communication apparatus in embodiments shown in FIG. 2 and FIG. 3. For details, refer to related descriptions in embodiments shown in FIG. 2 and FIG. 3. Details are not described herein again.

It should be understood that a specific process in which the modules perform the foregoing corresponding process has been described in detail in the foregoing method embodiment. For brevity, details are not described herein again.

The processing module 401 in the foregoing embodiment may be implemented by at least one processor or a processor-related circuit. The transceiver module 402 may be implemented by a transceiver or a transceiver-related circuit. The transceiver module 402 may also be referred to as a communication module or a communication interface. The storage module may be implemented by at least one memory.

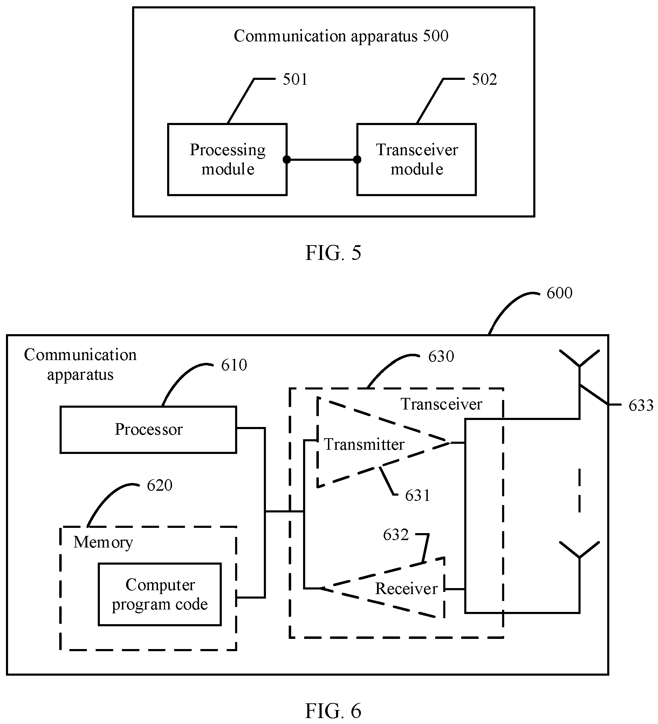

FIG. 5 is a diagram of another structure of a communication apparatus according to an embodiment of this application. As shown in FIG. 5, a communication apparatus 500 may be configured to perform processes performed by the first communication apparatus or the second communication apparatus in embodiments shown in FIG. 2 and FIG. 3. For details, refer to related descriptions in the foregoing method embodiments.

The communication apparatus 500 includes a processing module 501 and a transceiver module 502.

The processing module 501 is configured to process data. The transceiver module 502 may implement a corresponding communication function. The transceiver module 502 may also be referred to as a communication interface or a communication module.

Optionally, the communication apparatus 500 may further include a storage module, and the storage module may be configured to instructions and/or data. The processing module 501 may read the instructions and/or the data in the storage module, to enable the communication apparatus to implement the foregoing method embodiment.

In a possible implementation, the communication apparatus 500 may be configured to perform an action performed by the first communication apparatus in the foregoing method embodiments. The communication apparatus 500 may be the first communication apparatus or a component that may be disposed in the first communication apparatus. The processing module 501 is configured to perform a processing-related operation on a first communication apparatus side in the foregoing method embodiments. The transceiver module 502 is configured to perform a receiving-related operation on the first communication apparatus side in the foregoing method embodiments. For example, the communication apparatus 500 is configured to perform the following solution.

The processing module 501 is configured to: determine a value of a first parameter and a value of a second parameter, where the value of the first parameter is a value of the first parameter in a target parameter value combination, the value of the second parameter is a value of the second parameter in the target parameter value combination, the target parameter value is one of one or more parameter value combinations, the one or more parameter value combinations are determined based on a first candidate set and a second candidate set, the first candidate set includes one or more values of the first parameter, the second candidate set includes one or more values of the second parameter, the first parameter and the second parameter are jointly used to determine an element in a first sequence, the first sequence is a z-th order exponential sequence, and z is an integer greater than or equal to 3; generate the first sequence based on the value of the first parameter and the value of the second parameter; and generate a target pilot sequence based on the first sequence. The transceiver module 502 is configured to send the target pilot sequence.

In another possible implementation, the communication apparatus 500 may be configured to perform an action performed by the second communication apparatus in the foregoing method embodiments. The communication apparatus 500 may be the second communication apparatus or a component that may be configured in the second communication apparatus. The processing module 501 is configured to perform a processing-related operation on a second communication apparatus side in the foregoing method embodiments. The transceiver module 502 is configured to perform a receiving-related operation on the second communication apparatus side in the foregoing method embodiments.

Optionally, the transceiver module 502 may include a sending module and a receiving module. The sending module is configured to perform the sending operation in the foregoing method embodiments. The receiving module is configured to perform the receiving operation in the foregoing method embodiments.

It should be noted that the communication apparatus 500 may include the sending module but does not include the receiving module. Alternatively, the communication apparatus 500 may include the receiving module but does not include the sending module. This may be specifically determined based on whether the foregoing solution performed by the communication apparatus 500 includes a sending action and a receiving action.

Optionally, the communication apparatus 500 is configured to perform actions performed by the first communication apparatus or the second communication apparatus in embodiments shown in FIG. 2 and FIG. 3. For details, refer to related descriptions in embodiments shown in FIG. 2 and FIG. 3. Details are not described herein again.

It should be understood that a specific process in which the modules perform the foregoing corresponding process has been described in detail in the foregoing method embodiment. For brevity, details are not described herein again.

The processing module 501 in the foregoing embodiment may be implemented by at least one processor or processor-related circuit. The transceiver module 502 may be implemented by a transceiver or a transceiver-related circuit. The transceiver module 502 may also be referred to as a communication module or a communication interface. The storage module may be implemented by at least one memory.

This application further provides a communication apparatus 600. The communication apparatus 600 may be a terminal device, a processor in the terminal device, or a chip. The communication apparatus 600 may be configured to perform the operation performed by the first communication apparatus or the second communication apparatus in the foregoing method embodiments.

When the communication apparatus 600 is a terminal device, FIG. 6 is a simplified diagram of a structure of the terminal device. As shown in FIG. 6, the terminal device includes a processor. The processor is mainly configured to: process a communication protocol and communication data, control the terminal device, execute a software program, process data of the software program, and so on.

Optionally, the terminal device further includes a memory and/or a transceiver. The memory may store computer program code. The transceiver includes at least one of the following: a transmitter machine 631, a receiver machine 632, a radio frequency circuit (not shown in the figure), an antenna 633, or an input/output apparatus (not shown in the figure).

The memory is mainly configured to store the software program and data. The radio frequency circuit is mainly configured to: perform conversion between a baseband signal and a radio frequency signal, and process the radio frequency signal. The antenna is mainly configured to receive and transmit a radio frequency signal in a form of an electromagnetic wave. The input/output apparatus may include a touchscreen, a display, a keyboard, or the like. The input/output apparatus is mainly configured to: receive data input by a user, and output data to the user. It should be noted that some types of terminal devices may have no input/output apparatus.

When needing to send data, after performing baseband processing on the to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 6 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In embodiments of this application, the antenna and the radio frequency circuit that have a transceiver function may be considered as a transceiver module of the terminal device, and the processor that has a processing function may be considered as a processing module of the terminal device.

As shown in FIG. 6, the terminal device includes a processor 610. Optionally, the terminal device further includes a memory 620 and/or a transceiver 630. The processor 610 may also be referred to as a processing unit, a processing board, a processing module, a processing apparatus, or the like. The transceiver 630 may also be referred to as a transceiver unit, a transceiver machine, a transceiver apparatus, or the like.

Optionally, a component that is in the transceiver 630 and that is configured to implement a receiving function may be considered as a receiving module, and a component that is in the transceiver 630 and that is configured to implement a sending function may be considered as a sending module. In other words, the transceiver 630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 610 is configured to perform processing actions on a first communication apparatus side or a second communication apparatus side in embodiments shown in FIG. 2 and FIG. 3. Optionally, the transceiver 630 is configured to perform receiving/sending actions on the first communication apparatus side or the second communication apparatus side in embodiments shown in FIG. 2 and FIG. 3.

It should be understood that FIG. 6 is merely an example rather than a limitation. The terminal device including the transceiver module and the processing module may not depend on the structure shown in FIG. 4 or FIG. 6.

When the communication apparatus 600 is a chip, the chip includes a processor, a memory, and a transceiver. The transceiver may be an input/output circuit or a communication interface. The processor may be a processing module, a microprocessor, or an integrated circuit integrated on the chip. A sending operation of the first communication apparatus or the second communication apparatus in the foregoing method embodiments may be understood as an output of the chip, and a receiving operation of the first communication apparatus or the second communication apparatus in the foregoing method embodiments may be understood as an input of the chip.

This application further provides a communication apparatus 700. The communication apparatus 700 may be a network device or a chip. The communication apparatus 700 may be configured to perform operations performed by the first communication apparatus or the second communication apparatus in embodiments shown in FIG. 2 and FIG. 3.

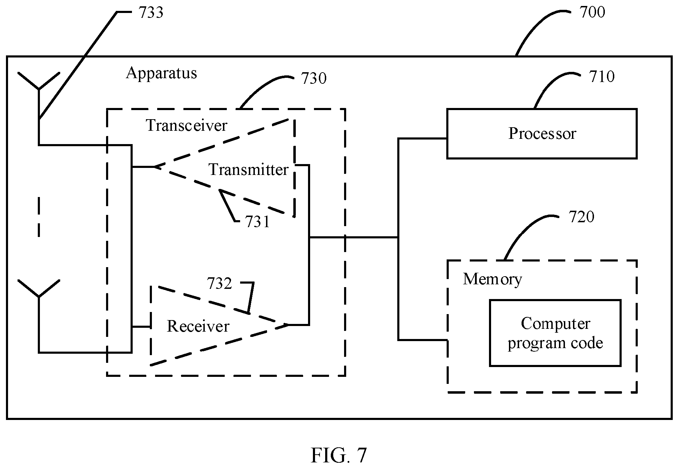

When the communication apparatus 700 is the network device, for example, a base station, FIG. 7 is a simplified diagram of a structure of the base station. The base station includes a part 710. Optionally, the base station further includes a part 720 and/or a part 730.

The part 710 is mainly configured to: perform baseband processing, control the base station, and the like. The part 710 is usually a control center of the base station, may be usually referred to as a processor, and is configured to control the base station to perform a processing operation on a network device side in the foregoing method embodiment.

The part 720 is mainly configured to store computer program code and data.

The part 730 is mainly configured to receive and send a radio frequency signal and perform conversion between a radio frequency signal and a baseband signal. The part 730 may be usually referred to as a transceiver module, a transceiver machine, a transceiver circuit, a transceiver, or the like. The transceiver module in the part 730 may also be referred to as the transceiver machine, the transceiver, or the like, and includes an antenna 733 and a radio frequency circuit (not shown in the figure). The radio frequency circuit is mainly configured to perform radio frequency processing. Optionally, in the part 730, a component configured to implement a receiving function may be considered as a receiver machine, and a component configured to implement a sending function may be considered as a transmitter machine. In other words, the part 730 includes a receiver machine 732 and/or a transmitter machine 731. The receiver machine may also be referred to as a receiving module, a receiver, a receiver circuit, or the like, and the transmitter machine may be referred to as a transmitting module, a transmitter, a transmitter circuit, or the like.

The part 710 and the part 720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module in the part 730 is configured to perform a receiving/sending-related process performed by the first communication apparatus or the second communication apparatus in embodiments shown in FIG. 2 and FIG. 3. The processor in the part 710 is configured to perform the processing-related process performed by the first communication apparatus or the second communication apparatus in embodiments shown in FIG. 2 and FIG. 3.

It should be understood that FIG. 7 is merely an example rather than a limitation, and the network device including the processor, the memory, and the transceiver may not depend on the structure shown in FIG. 5 or FIG. 7.

When the communication apparatus 700 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

An embodiment of this application further provides a computer-readable storage medium. The computer-readable storage medium stores computer instructions used to implement the method performed by the first communication apparatus or the second communication apparatus in the foregoing method embodiments.

For example, when a computer program is executed by a computer, the computer is enabled to implement the method performed by the first communication apparatus or the second communication apparatus in the foregoing method embodiments.

An embodiment of this application further provides a computer program product including instructions. When the instructions are executed by a computer, the computer is enabled to implement the method performed by the first communication apparatus or the second communication apparatus in the foregoing method embodiments.

An embodiment of this application further provides a communication system. The communication system includes the first communication apparatus in the foregoing embodiments and the second communication apparatus in the foregoing embodiments. The first communication apparatus is configured to perform some or all operations performed by the first communication apparatus in the foregoing method embodiments, and the second communication apparatus is configured to perform some or all operations performed by the second communication apparatus in the foregoing method embodiments.

An embodiment of this application further provides a chip apparatus, including a processor, configured to invoke a computer program or computer instructions stored in a memory, to enable the processor to perform the methods provided in embodiments shown in FIG. 2 and FIG. 3.

In a possible implementation, an input of the chip apparatus corresponds to a receiving operation in any one of embodiments shown in FIG. 2 and FIG. 3, and an output of the chip apparatus corresponds to a sending operation in any one of embodiments shown in FIG. 2 and FIG. 3.

Optionally, the processor is coupled to a memory through an interface.

Optionally, the chip apparatus further includes the memory, and the memory stores the computer degree or the computer instructions.

The processor mentioned anywhere above may be a general-purpose central processing unit, a microprocessor, an application-specific integrated circuit (application-specific integrated circuit, ASIC), or one or more integrated circuits for controlling program execution of the method provided in any one of embodiments shown in FIG. 2 and FIG. 3. The memory mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that, for a purpose of convenient and brief description, for explanation and beneficial effects of related content in any apparatus provided above, refer to the corresponding method embodiment provided above. Details are not described herein again.

In several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or some of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A determining method, wherein the method comprises:
determining a first candidate set and a second candidate set, wherein the first candidate set comprises one or more values of a first parameter, the second candidate set comprises one or more values of a second parameter, the first parameter and the second parameter are jointly used to determine an element in a first sequence, the first sequence is a z-th order exponential sequence, and z is an integer greater than or equal to 3; and
determining one or more parameter value combinations based on the first candidate set and the second candidate set, wherein each parameter value combination comprises one value of the first parameter and one value of the second parameter.

2. The method according to claim 1, wherein the first parameter and the second parameter are jointly used to determine a phase of the element in the first sequence.

3. The method according to claim 1 or 2, wherein the first parameter is a coefficient of an x-th order term, with respect to a position index variable n, used for generating a phase in the first sequence; the second parameter is a coefficient of a y-th order term, with respect to the position index variable n, used for generating the phase in the first sequence; x is an integer greater than or equal to 2; y is an integer greater than or equal to 2; and x is greater than y.

4. The method according to any one of claims 1 to 3, wherein each of the one or more parameter value combinations meets a first target condition.

5. The method according to claim 4, wherein that each parameter value combination meets the first target condition comprises: among all values of the first parameter in the first candidate set and all values of the second parameter in the second candidate set, Q parameter value combinations corresponding to first Q values that minimize a value of a target function, wherein Q is an integer greater than or equal to 1.

6. The method according to claim 5, wherein the target function is a function related to a peak-to-average power ratio PAPR, or a function related to a cubic metric CM.

7. The method according to claim 5 or 6, wherein the target function is a function representing the PAPR or the CM.

8. The method according to any one of claims 5 to 7, wherein the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 πnk}{R}}\right)}^{D}$
wherein *sₒ*(*n*) = *z*(*n*)*, z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, and R represents a quantity of sampling points for sampling a time domain signal generated by using *sₒ*(*n*); or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, and R represents a quantity of sampling points for sampling a time domain signal generated by using *sₒ*(*n*)*.*

9. The method according to any one of claims 5 to 7, wherein the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 πnθ}\right)}^{D}$
wherein *sₒ*(*n*) = *z*(*n*), *z*(*n*) is the first sequence, the position index variable n in the first sequence belongs to an interval [0, P-1], P = L, L is a length of a pilot sequence, C is a positive number, D is a positive number, and N is a largest prime number not greater than L or a smallest prime number not less than L; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, and N is a largest prime number not greater than L or a smallest prime number not less than L.

10. The method according to any one of claims 5 to 7, wherein the target function is expressed as: $f \left({s}_{o}\left(n\right)\right) = {max}_{k = 0 , 1 , … , R - 1} {\left(C{\sum }_{n = 0}^{N - 1} {s}_{o} \left(n\right) {e}^{\frac{j 2 π \left(n+\frac{{f}_{C}}{{f}_{O}}\right) k}{R}}\right)}^{D}$
wherein *sₒ*(*n*) = *z*(*n*), *z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*)*,* f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, R represents a quantity of sampling points for sampling a time domain signal generated by using *sₒ*(*n*)*,* f_{c} is a frequency of a carrier to which the pilot sequence is mapped, and fₒ is a center frequency of the carrier.

11. The method according to any one of claims 5 to 7, wherein the target function is expressed as: $f \left({s}_{o}\left(n\right)\right) = {max}_{0 \leq θ < 2 π} {\left(C{\sum }_{n = 0}^{N - 1} {s}_{o} \left(n\right) {e}^{j 2 π \left(n+\frac{{f}_{C}}{{f}_{O}}\right) θ}\right)}^{D}$
wherein *sₒ*(*n*) = *z*(*n*), *z*(*n*) is the first sequence, the position index variable n in the first sequence belongs to an interval [0, P-1], P = L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, L is a length of a pilot sequence, C is a positive number, D is a positive number, N is a largest prime number not greater than L or a smallest prime number not less than L, f_{c} is a frequency of a carrier to which the pilot sequence is mapped, and fₒ is a center frequency of the carrier.

12. The method according to any one of claims 5 to 7, wherein the target function is expressed as: $f \left({s}_{o}\left(n\right)\right) = \frac{RCM \left[s\left(t\right)\right] {\left|- dB{RCM}_{ref}\right|}_{dB}}{C}$
wherein *sₒ*(*n*) = *z*(*n*), *z*(*n*) is the first sequence, the position index variable n in the first sequence belongs to an interval [0, P-1], P = L, L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ , and *s*(*t*) is a time domain signal generated by using *sₒ*(*n*); and both *RCM*_{*ref*|*dB*} and *C* are constants, and *rms*(u) represent taking a root mean square of u; or
*sₒ*(*n*) is the first sequence, ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, *z*(*n*) is a base sequence, a position index variable n in the base sequence belongs to an interval [0, P-1], P < L, and L is a length of a pilot sequence; ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$ or ${\left.RCM\left[s\left(t\right)\right]\right|}_{dB} = 20 log \left[rms\left[{\left(\frac{\left|{s}_{o}\left(n\right)\right|}{rms \left[{s}_{o}\left(n\right)\right]}\right)}^{3}\right]\right]$, and *s*(*t*) is a time domain signal generated by using *sₒ*(*n*); and both *RCM*_{*ref*|*dB*} and C are constants, and *rms*(*u*) represent taking a root mean square of u.

13. The method according to any one of claims 8 to 12, wherein *t*(*n* - *P*) represents (*t*(0), *t*(1), ..., *t*(*L-P -* 1)), and (*t*(0), *t*(1), ... , *t*(*L* - *P* - 1)) is a combination *(t(0),* t(1), ..., *t*(*L* - *P* - 1)), minimizing a value of the target function, among all values of *(t(0),* t(1), ..., *t*(*L - P -* 1)).

14. The method according to any one of claims 8 to 13, wherein $z \left(n\right) = {e}^{- j 2 π \left(\frac{{an}^{3}}{N}+\frac{{bn}^{2}}{M}+\frac{cn}{K}+d\right)}$ or $z \left(n\right) = {e}^{- j 2 π \left(\frac{{an}^{3}}{N}+\frac{b \left({n}^{2}+{c}_{0}n\right)}{M}+\frac{c ′ n}{K ′}+d\right)}$ , wherein 0 ≤ *n* ≤ *P -* 1, the first parameter is a in *z*(*n*), and the second parameter is b in *z*(*n*).

15. The method according to any one of claims 8 to 14, wherein the method further comprises:
receiving first indication information, wherein the first indication information indicates the target function.

16. The method according to claim 15, wherein the first indication information is carried in downlink control information DCI, a media access control control element MAC CE, or a radio resource control RRC message.

17. The method according to any one of claims 1 to 16, wherein the one or more parameter value combinations are used to generate a pilot sequence set, the pilot sequence set comprises one or more pilot sequences, and one pilot sequence corresponds to one parameter value combination.

18. The method according to any one of claims 1 to 17, wherein the method further comprises:
receiving second indication information, wherein the second indication information indicates one of the one or more parameter value combinations.

19. The method according to claim 18, wherein the method further comprises:
generating the first sequence based on the parameter value combination indicated by the second indication information;
generating a target pilot sequence based on the first sequence; and
sending the target pilot sequence.

20. The method according to claim 18 or 19, wherein the second indication information indicates an index of the parameter value combination; or the second indication information indicates a value of the first parameter and a value of the second parameter in the parameter value combination.

21. The method according to any one of claims 1 to 16, wherein the method further comprises:
generating a pilot sequence set based on the one or more parameter value combinations and the first sequence, wherein the pilot sequence set comprises one or more pilot sequences, and one pilot sequence corresponds to one parameter value combination.

22. The method according to claim 17 or 21, wherein the pilot sequences in the pilot sequence set are sorted in ascending order or descending order of corresponding values of the target function for the parameter value combinations corresponding to the pilot sequences; or
the pilot sequences in the pilot sequence set are sorted in ascending order or descending order of values of the first parameter in the parameter value combinations corresponding to the pilot sequences, and pilot sequences corresponding to parameter value combinations with a same value of the first parameter are sorted in ascending order or descending order of values of the second parameter in the parameter value combinations with the same value of the first parameter; or
the pilot sequences in the pilot sequence set are sorted in ascending order or descending order of values of the second parameter in the parameter value combinations corresponding to the pilot sequences, and pilot sequences corresponding to parameter value combinations with a same value of the second parameter are sorted in ascending order or descending order of values of the first parameter in the parameter value combinations with the same value of the second parameter.

23. The method according to claim 21 or 22, wherein the method further comprises:
receiving third indication information, wherein the third indication information indicates a target pilot sequence, and the target pilot sequence is a pilot sequence in the pilot sequence set.

24. The method according to claim 23, wherein the method further comprises:
sending the target pilot sequence.

25. The method according to claim 23 or 24, wherein the third indication information indicates an index of the target pilot sequence.

26. The method according to any one of claims 23 to 25, wherein the third indication information is carried in DCI, a MAC CE, or an RRC message.

27. The method according to any one of claims 1 to 26, wherein the value of the first parameter in the first candidate set belongs to an interval (0, N-1], and the value of the second parameter in the second candidate set belongs to an interval (0, M-1], or an interval (0, N-1], or an interval (0, m-1], wherein m is a prime number; M is a period of the y-th order term, with respect to the position index variable n, used for generating the phase in the first sequence; N is a period of the x-th order term, with respect to the position index variable n, used for generating the phase in the first sequence; x is an integer greater than or equal to 2; y is an integer greater than or equal to 2; and x is greater than y.

28. The method according to claim 27, wherein M = N; or M = 2N; or M = *sm*², wherein both s and m are prime numbers.

29. The method according to any one of claims 1 to 28, wherein the first sequence ${s}_{o} \left(n\right) = \left\{\begin{matrix}z \left(n\right) , 0 \leq n \leq P - 1 \\ t \left(n-P\right) , P \leq n \leq L - 1\end{matrix}\right.$, and 0 ≤ *n* ≤ *P* - 1, wherein P < L; L is a length of a pilot sequence; *z*(*n*) is a base sequence; a position index variable n in the base sequence belongs to an interval [0, P-1]; P = *min*(*N*,*M*) or *P* = *max*(*N,M*); M is a period of a y-th order term, with respect to the position index variable n, used for generating a phase in the base sequence; and N is a period of an x-th order term, with respect to the position index variable n, used for generating the phase in the base sequence.

30. A communication apparatus, wherein the communication apparatus comprises a processing module, and the processing module is configured to perform a processing operation in the method according to any one of claims 1 to 29.

31. The communication apparatus according to claim 30, wherein the communication apparatus further comprises a transceiver module, and the transceiver module is configured to perform receiving and sending operations in the method according to any one of claims 1 to 29.

32. A communication apparatus, wherein the communication apparatus comprises a processor, and the processor is configured to execute a computer program or computer instructions in a memory, to perform the method according to any one of claims 1 to 29.

33. A computer-readable storage medium, wherein the computer-readable storage medium stores a computer program; and when the computer program is executed by a communication apparatus, the communication apparatus is enabled to perform the method according to any one of claims 1 to 29.

34. A computer program product, wherein the computer program product comprises computer instructions, and when the computer instructions are run on a computer, the computer is enabled to perform the method according to any one of claims 1 to 29.

35. A chip system, wherein the chip system comprises a processor, and the processor is configured to invoke a computer program or computer instructions, to enable a communication device in which the chip system is installed to perform the method according to any one of claims 1 to 29, or the communication device to perform the method according to any one of claims 1 to 29.

36. The chip system according to claim 35, wherein the chip system further comprises a communication interface, configured to communicate with another apparatus.

37. A chip system, wherein the chip system is used in an electronic device, the chip system comprises one or more processors, and the one or more processors are configured to invoke computer instructions, to enable the electronic device to perform the method according to any one of claims 1 to 29.
